# EUROPEAN PATENT SPECIFICATION

(11) **EP 4 042 272 B1**
(45) Date of publication and mention of the grant of the patent: **02.07.2025**
(21) Application number: 20807091.2
(22) Date of filing: 08.10.2020
(51) Int. Cl.: G06F 8/38, G06F 9/451

(54) **USER INTERFACE GENERATION**
BENUTZERSCHNITTSTELLENERZEUGUNG
GÉNÉRATION D'INTERFACE UTILISATEUR

(30) Priority: 08.10.2019 GB 201914521
(43) Date of publication of application: 17.08.2022
(73) Proprietor: Wanilla Holdings Ltd, St Albans London AL3 4PQ (GB)
(72) Inventor: STERGIOU, Alexandros, London N6 5YW (GB)
(74) Representative: Keltie LLP
(86) International application number: PCT/GB2020/052500
(87) International publication number: WO 2021/069905

(56) References cited:
- US-A1- 2006 212 842
- US-A1- 2016 378 439
- US-A1- 2019 278 571

## Description

### TECHNICAL FIELD

The present invention relates to the generation and updating of user interfaces (UI) for different user devices. Furthermore, the present disclosure is directed to UI application generation using an easy-to-use graphical user interface using a novel data structure.

### BACKGROUND

Currently, any user of a computing device such as a smartphone or tablet can download an application (or 'app') from an application store and install the app onto their computing device. Such applications are often referred to as 'native applications' or 'native apps' as they are configured to run directly on the device using the operating system of the computing device itself. An example of an application store is the Apple App Store for users of computing devices produced by Apple and running Apple's operating system for the selected computing device, e.g. iOS for the Apple iPhone or macOS for the Apple Mac. An app that is available in the Apple App Store for download and installation on a device running iOS is written specifically for iOS devices. Analogously, an app that is available in the Apple App Store for download and installation on a device running the macOS operating system is written specifically for macOS devices. iOS and macOS apps can be written in the same programming language, namely Swift or Objective-C.

Consequently, a developer aiming to create an app for use on multiple different Apple devices, wherein each device is running a different operating system, needs to write a different app for each operating system. Furthermore, the developer when writing an update for an app has to write a different version of the same update for each different operating system. At the user end, a user that requires use of the same app on different devices, for example on both an Apple iPhone and an Apple Mac, needs to download and install a different app for each device. Also, in use, the user is then required to download and install different updates for each of the apps on the devices being used.

This problem exists not only for the creation and use of apps written in the same programming language for different operating systems, as per the above example, but also for the creation and use of apps that need to be written in different programming languages depending on the operating system of the computing device. In the latter case, each operating system (e.g. iOS, Android, Windows) has its own specific native programming language (e.g. Objective-C for iOS apps, Java for Android apps, and Visual C++ for Windows Mobile apps). A developer creating an app for use on multiple different operating systems that each require the app to be written in a different language, is therefore required to perform multiple programming tasks and this is particularly apparent for a single update, where multiple different versions of the update need to be written.

In addition, the developer needs to write each update to the apps in different languages such that the updates can be applied to the apps being used on different devices. This process is cumbersome not only for the developer but also for the user. For example, a user of an Android phone, a Windows PC and an Apple tablet wanting to use the same app across all three devices needs to download and install a different app on each device, followed by downloading and installing corresponding updates to each app on each device when the updates become available.

A further problem for the developer is that a significant amount of programming knowledge is required in order to create the user interface (UI) of an app. The apps discussed above are 'native apps'. An alternative to a native app is a web app. In contrast to a native app, a web app is written in a suitable web app language (HTML5 or JavaScript) and the web app is accessed through a web browser and does not need to be downloaded and installed on the device itself. Updates can be made to the web app via a web server without user input. A problem with web apps is that they can access a limited amount of the device's native features, such as geolocation and media, whereas native apps are able to interface with the device's native features and hardware. Furthermore, web apps are typically slow and power-intensive in comparison to native apps. Native apps typically perform faster and more efficiently in comparison to web apps, and are dedicated to the device, so they can interface with the device's native features and hardware.

However, the UI of a native app is more difficult, time-intensive and skill-intensive to create. The problem of requiring a significant amount of programming skills to create a UI is exacerbated by the current need for the developer to write a native app and the native app's updates in a different programming language for each and every operating system, as discussed above. Supporting multiple different operating systems therefore requires the developer of the app to maintain multiple code bases. As a consequence, native apps are generally more expensive to develop, maintain and update. In addition, users may be on different versions of the app, which can make it more difficult to provide support for the app.

US 2016/378439 A1 discloses a system that accesses an application development user interface ("UI") through a browser. The application development UI is hosted by a web-based application development server in a cloud system that provides an application development framework ("ADF"). The system develops the application through the application development UI. The application is developed with the ADF and is configured to be downloaded from a download location in the cloud system. The application is configured to be downloaded on a device as a native application.

The present invention aims to overcome or at least partly mitigate one or more of the above-described problems.

### SUMMARY OF THE INVENTION

The invention is defined by the appended set of claims.

### BRIEF DESCRIPTION OF THE DRAWINGS

The present invention will now be described, by way of example only, with reference to the accompanying drawings, in which:
Figure 1 is a schematic block diagram showing a system including a creator device and a central Configuration server which together create and provide the Configuration to multiple different user devices to generate GUIs in accordance with an embodiment of the present invention;
Figure 2 is a schematic block diagram showing in greater detail the composition of the Configuration shown in Figure 1, where the Configuration comprises a User Interface (UI) Layer and a Data Layer;
Figure 3 is a schematic block diagram showing the UI Layer shown in Figure 2 in greater detail;
Figure 4 is a schematic block diagram showing the Data Layer shown in Figure 2 in greater detail;
Figure 5 is a flow diagram showing a method of creating the Configuration shown in Figure 2;
Figure 6 is a flow diagram showing a method of using the Configuration of Figure 2 to generate a Ul;
Figure 7 is a schematic block diagram showing an exemplary hierarchy tree structure of a View Instruction model of the UI Layer of Figure 3;
Figure 8 is a schematic block diagram showing the View instruction of Figure 3 and its UI element representation properties;
Figure 9 is a schematic block diagram showing the View instruction of Figure 3 and its relationship with other models that relate to the layout and positioning of the UI element when it is displayed on the user device display;
Figure 10 is a schematic block diagram showing properties of the API model that is used by the Data Layer of Figure 4;
Figure 11 is a schematic block diagram showing properties and usage of an API Item of an API model in relation to the UI and Data Layers of Figures 3 and 4, in accordance with an embodiment of the present invention;
Figure 12 is a schematic block diagram showing an exemplary hierarchy tree structure of an API Item, and an example of an API data response, of the Data Layer shown in Figure 4;
Figure 13 is a schematic block diagram demonstrating the relationship between the UI Layer and Data Layer of Figures 3 and 4;
Figure 14 is a flow diagram showing the process of interaction between the UI Layer and the Data Layer of Figures 3 and 4;
Figure 15 is a schematic block diagram showing an Application Configuration model of the Configuration of Figure 2, in accordance with an embodiment of the present invention;
Figure 16 is a schematic block diagram showing the Module and the Screen components of the Application Configuration model of Figure 15 in further detail;
Figure 17 is a schematic block diagram showing the Feature and Feature Action components of the Application Configuration model of Figure 15 in further detail;
Figure 18 is a series of screenshots depicting steps that a creator may take whilst using the creator app, from downloading the creator app to applying layout constraints to a UI element on a first Screen, in accordance with an embodiment of the present invention;
Figure 19 is a series of screenshots depicting steps that a creator may take whilst using the creator app continuing from Figure 18, in respect of executing an API request;
Figure 20 is a series of screenshots depicting steps that a creator may take whilst using the creator app continuing from Figure 19, in respect of setting up a reusable View Instruction;
Figure 21 is a series of screenshots depicting steps that a creator may take whilst using the creator app continuing from Figure 20, in respect of setting up a second Screen; and
Figure 22 is a series of screenshots depicting steps that a creator may take whilst using the creator app continuing from Figure 21, in respect of completing set up of the Configuration.

### DETAILED DESCRIPTION

In the following description the term GUI (Graphical User Interface) and UI (User Interface) have been used interchangeably. Both terms should be considered to relate to a computer-generated user interface which, in use, is generated on a user device and which comprises textual and/or graphical elements.

In accordance with embodiments of the present invention, generally there is provided a system including a creator device for specifying a new user interface (GUI) and a configuration server for storing the elements which enable the specified GUI to be created on other user devices running different operating systems. In use, a creator (user) can create and specify the GUI by use of an easy-to-use GUI creation application ('creator app') provided on the creator device. The creator app can be embodied in several different ways, but in this embodiment, it is provided as an application for the creator device which is downloaded from an application server. The creator app, in use, generates a universal configuration data file (hereinafter referred to as a 'Configuration') defining a configuration of the GUI. The Configuration describes the appearance and behaviour of the GUI being specified, and particularly its behaviour in relation to data it requires to make the GUI operable. The Configuration has a scalable data structure which includes definitions of GUI elements, such as buttons or switches, and defines requests for data directed to a server. The Configuration is created to configure a copy of the GUI generated by a UI generator on any user device for an end user. However, the Configuration does not contain any programming commands. Rather, it is just a data file which has a specific data structure to represent data. The data structure (described in detail later) is specified such that it can optimally be used (with the UI generator) to generate a GUI on a user device. Also, the data structure is scalable as is has a hierarchical structure which enables more complicated UI elements of the GUIs to be defined within other UI elements. The UI generator can be embodied in several different ways, but in this embodiment, it is provided as a downloadable native application for the user device. The UI generator uses the previously defined Configuration in run time to generate the GUI and connect to a data storage server, which in this embodiment is the configuration server. The GUI is generated by displaying GUI elements on the screen of the user device, submitting the requests for data to the data server, parsing received data, and populating UI elements with relevant data items.

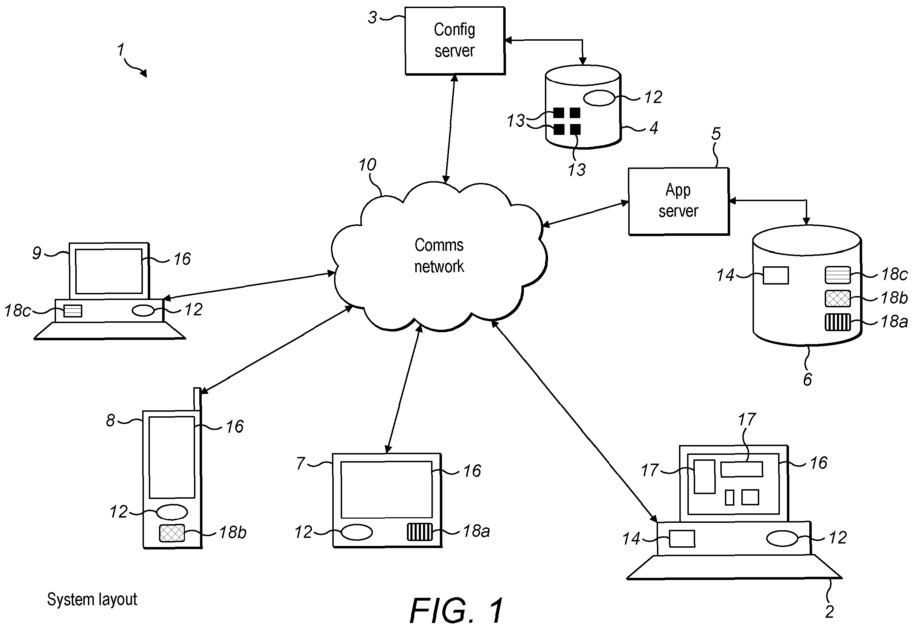

More specifically referring to Figure 1, there is shown a system 1 according to an embodiment of the present invention. The system 1 comprises a creator device 2 on which a user (creator) specifies or designs a GUI 16 having a particular layout of graphical elements 17. The creator, also using the creator device 2, specifies the data which is to be pulled into the GUI 16 by way of data requests. The look and positioning of each of the GUI elements 17 making up the GUI and the data which needs to be pulled into them (or its location), is specified in the Configuration 12. The Configuration 12 is created by use of the creator app 14 which has previously been downloaded from the application server 5, such as the App Store (iOS) or the Google Play Store (Android). It should be noted that although only a single application server 5 associated with a single data store 6 is shown in Figure 1, the system may comprise multiple different application servers, each application server being associated with its own data store. The way in which the creator app 14 functions to enable relatively easy creation of GUIs by creators who have no previous programming knowledge will be described in greater detail later. However, the result of the use of the creator app 14 is a Configuration 12 which is uploaded to the configuration server 3 and stored in the data store 4 of the configuration server 3.

The system is configured to support different user devices 7, 8, 9, running different operating systems. In the present non-limiting example shown in Figure 1, three devices are provided. The first device is a tablet 7 which has iOS installed on it as its operating system, the second device is a smartphone which has Android installed on it as its operating system and the third device is a PC 9 which has a Windows operating system running on it. Each device 7, 8, 9, has a respective generator 18a, 18b, 18c, which has been downloaded from the application server 5 which acts as an application store. In this regard, the application server 5 has a plurality of applications 18a, 18b, 18c stored in its data store 6, copies of which are made available to be downloaded by user devices 7, 8, 9. In use when each generator 18a, 18b, 18c, is run on its corresponding user device 7, 8, 9, the respective generator 18a, 18b, 18c downloads a copy of the Configuration 12 from the configuration server 3 which is then interpreted by the generator 18a, 18b, 18c and used to create the GUI 16 on the respective user device 7, 8, 9, operating its specific operating system. In this regard, each generator 18a, 18b, 18c acts as a native application. The Configuration 12 not only specifies the layout of the graphical elements of the GUI 16 but also the data 13 which is required to populate the GUI 16. This data 13 may be also be downloaded with the Configuration 12 from the data store 4 of the configuration server 3. In this regard, it is to be appreciated that the Configuration is generally a file between a few Kilobytes and 1 to 2 Megabytes in size, in other words, the Configuration 12 is relatively small and therefore does not take much time to download. This is important as the Configuration is often downloaded each time a GUI instance is to be generated. All of the user devices, the servers and the creator device are interconnected via a wide area communications network 10, such as the Internet.

In use, when a creator downloads, installs and opens the creator app 14 on the creator device 2, the creator app 14 is used to create the Configuration 12 which defines the GUI 16, namely the form and appearance and also the positioning of the GUI elements 17 of the GUI 16 as well as the required data calls to obtain data to populate the GUI 16. This information is stored within the specific data structure of the Configuration 12 and is in this embodiment handled in a JSON (JavaScript Object Notation) which is a standard text-based format for representing structured data based on JavaScript object syntax. The information is subsequently converted into a raw binary data and then uploaded to the configuration server 3 and stored in the configuration server data store 4. However, the data can also be stored in JSON format in other embodiments or in any other suitable form. However in these other embodiments, the stored data needs to be converted into a raw data format before being sent to any requesting generator 18a, 18b, 18c. Accordingly storing the configuration 12 in a raw data format means that it is ready to be provided to any requesting generator 18a, 18b, 18c.

The configuration server 3 makes the Configuration 12 available to all devices 7, 8, 9, so that they can generate the GUI 16 which has been defined by the Configuration 12, when the Configuration 12 is obtained and executed by the generator 18a, 18b, 18c on the user device 7, 8, 9. The user is then able to utilise the generator 18a, 18b, 18c, on their user device 7, 8, 9 whereby the appearance and behaviour of the GUI of the app is defined by the Configuration 12. The Configuration 12 has a specific data structure which is optimized for generating a UI and this data structure is discussed in greater detail later. As a result, the creator of the Configuration 12 is not required to perform any programming tasks or to generate update files for execution by the app, and the app does not require update files to be downloaded and installed by the user. Rather, when an update in a GUI of a user application is required, the creator only has to generate a single new Configuration 12 which then is uploaded to the Configuration Server 3 and made available. This single updated Configuration 12 then can be used by all the different user devices 7, 8, 9, running different operating systems, This updated Configuration 12 is called when the user application 18a, 18b, 18c is run on the user device 7, 8, 9 to generated the updated GUI. In an embodiment, the Configuration 12 is fetched from the config server 3 in the form of raw binary data which then are translated to JSON format and then converted to a Configuration model (instance) that the application (generator) 18, 18b, 18c uses to generate the GUI. JSON is one of the most commonly used types of data representation in web/mobile environments.

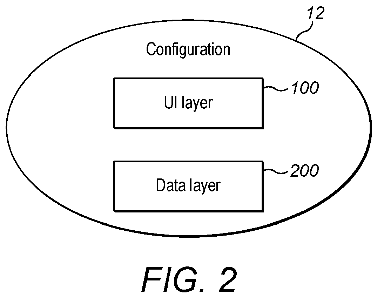

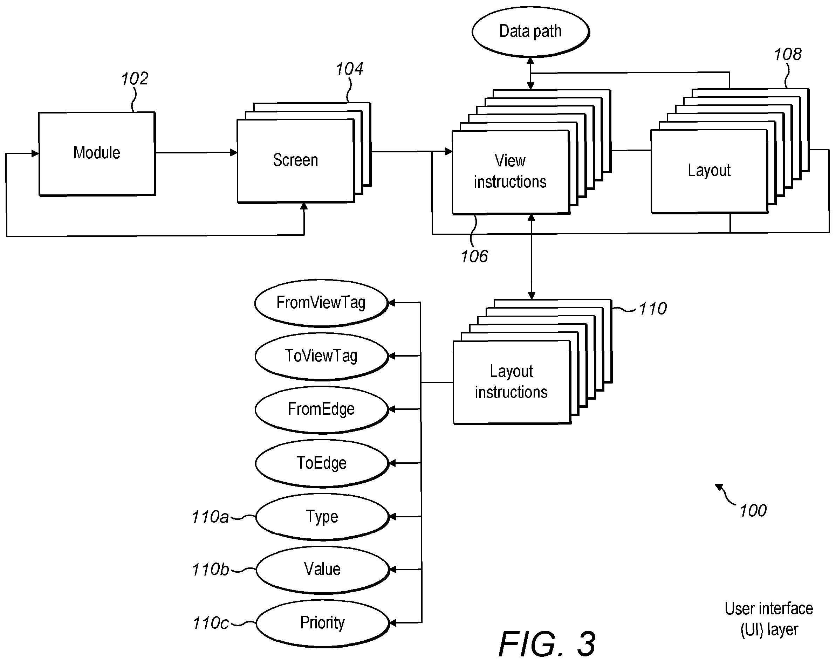

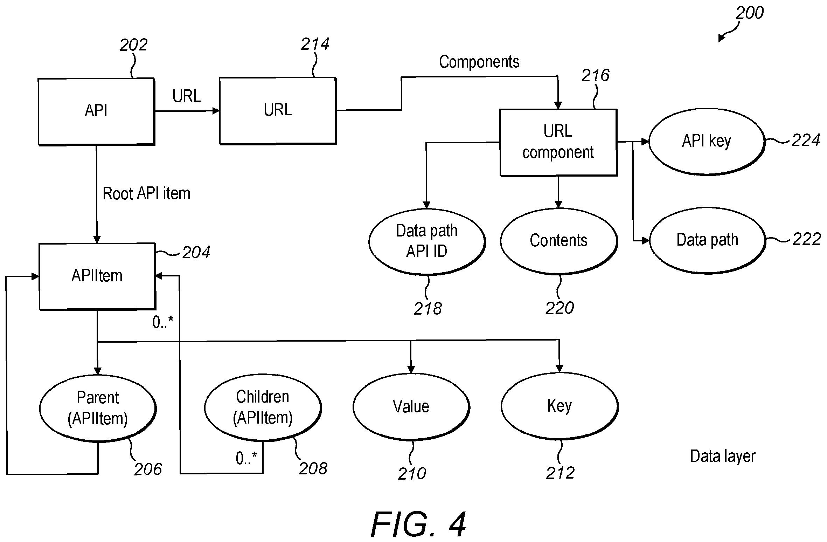

As mentioned above, the creator uses the creator app 14 to create the Configuration 12 which defines the GUI 16. The Configuration 12 is shown in greater detail in Figure 2. As it can be seen, the Configuration 12 comprises essentially two data structure elements a UI Layer 100 and a Data Layer 200. These layers are shown in greater detail in Figures 3 and 4, respectively. The UI Layer 100 quantifies the number, type, size, appearance and positioning of the UI Layer elements and the Data Layer 200 quantifies the location, type and number of Data Layer elements.

### UI Layer

The UI Layer 100 comprises one or more Modules. As shown in Figure 3, each Module 102 comprises a model that describes a logic group or list of Screens 104. Each Screen 104 comprises a list of 'View Instructions 106', alternatively called 'View Instruction models 106', or 'UI elements 106'.

A Screen 104 comprises a model representation of all of the elements that are required for an accurate display of the UI on a page. These elements are configured, rendered, and displayed by the list of View Instructions 106 that belong to the Screen 104. Each Screen 104 also comprises a set of properties that can be used to indicate behavioural preferences such as navigation and display.

The View Instructions 106 include properties that are used for appearance purposes, such as fonts, colours, and shadows. The View Instructions 106 include common UI elements such as labels, buttons, lists, text fields, images, web-content containers, switches, and sliders. Some of these UI elements allow for user interaction, namely buttons or lists.

Each View Instruction 106 comprises a 'Layout 108', alternatively called a 'Layout model 108'. The Layout 108 is responsible for the coordination and appearance of the View Instructions 106. Each View Instruction 106 further comprises a list of Child View Instruction models or Child View Instructions (not shown in Figure 3). The Child View Instructions are displayed within the Layout 108 (discussed in further detail below).

Each View Instruction 106 further comprises a list of 'Layout Instructions 110', alternatively called 'Layout Instruction models 110' or 'Layout View Instructions'. The Layout Instructions 110 include information required to apply a layout constraint on a view, e.g. to align, layout and display associated View Instructions 106 as applied to the UI elements of that screen For example, the Layout Instructions 110 indicate a Type 110a (e.g. width, height, aspect ratio), a Value 110b (e.g. 50 pixels), and a Priority 110c (e.g. a priority value on a layout constraint is used by a layout engine that solves a constraint satisfaction problem for User interfaces (see for example https://en.wikipedia.org/wiki/Constraint_satisfaction_problem , and https://en.wikipedia.org/wiki/ Cassowary_(software)). It is used to determine how important is the constraint when there is a constraint conflict). If the View Instruction 106 has API model and dataPath values, the Configuration instructs the data represented by the API model to be fetched and the value in the dataPath of the response to be applied to the View Instruction 106.

The View Instruction 106 includes common UI elements such as labels, buttons, lists, text fields, images, web-content containers, switches, and sliders. Some of these UI elements allow for user interaction, namely buttons or lists. Therefore, the creator of the GUI can optionally set a target screen on a View Instruction 106 with which the app will show a Screen 104 from an existing Module 102 in its Configuration. In this way, Screens 104 can be displayed to a user in a navigation stack on the resulting client app.

### Data Layer

Turning to Figure 4, a Data Layer 200 for use in creating an app using an embodiment of the present invention is shown. The Data Layer 200 may be referred to herein as a Data Layer model 200 or Data model 200. The Data Layer 200 is created to represent Application Program Interface (API) requests. The UI Layer 100 uses the Data Layer 200 to populate itself with data.

The Data Layer 200 comprises an API model 202. The API model 202 describes an HTTPS Request that is specified and configured by the creator. The HTTPS Request comprises a uniform source locator (URL) 214. The URL 214 includes one or more URL components 216. A URL component 216 can be added by the creator to the API model 202. Each URL component 216 is associated with a Data Path API ID 218, Contents 220, a Data Path 222 and an API Key 224.

With regard to the API Key 224, an API model 202, 702 might require information from a previous API model 202, 702 to construct its URL 214, 714. The Data Path API ID 218 is used to identify the API response (APlltem) 204 that has already been pulled and cached, and in that data, by using the Data Path API ID 218, it possible to obtain the value the API model 202, 702 requires to construct the URL.

An example of this is given below:
1. Generator 18a, 18b, 18c fetches data about a list of products (API 1) using configuration 12
2. Generator 18a, 18b, 18c has a product details screen which provides more information about a specific product. API 2 is created for that screen that needs a PRODUCT ID number in order to construct its URL. API 2 has a DATA PATH API ID 218 with the value of API 1. Once API 2's request is needed to be made, the Generator 18a, 18b, 18c will look for a response with an ID of API 2: DATA PATH API ID 218 and in there the Generator 18a, 18b, 18c searches for the API Item 204 with the data path of API 2: DATA PATH. The value 210 that that API item 204 has, will be used in API 2's URL.

Once a HTTPS Request has been made and the data from its response has been received, the data is mapped into an APlltem model 204. The APlltem model 204 includes a parent APlltem 206, one or more children APlltems 208, a value 210, and a key property 212 (described in greater detail later).

### Creation of Configuration by Creator App

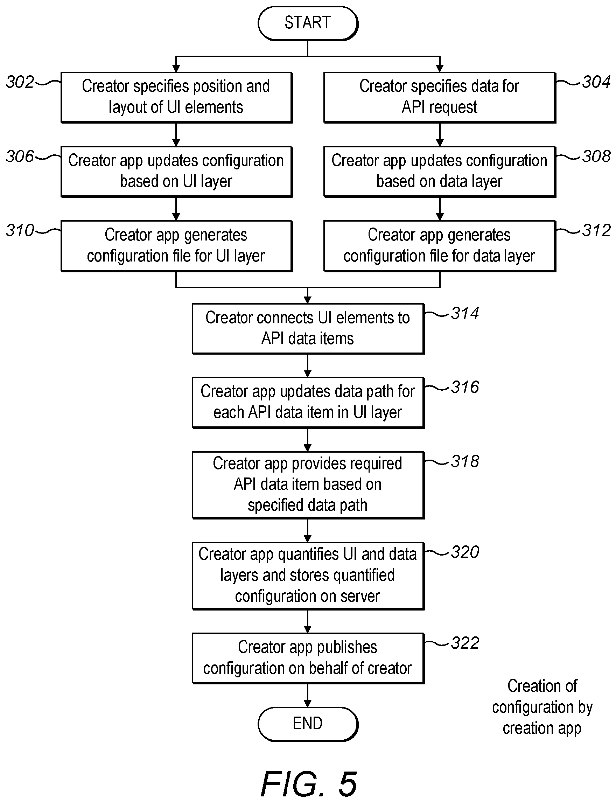

A method of creating a Configuration using the Creator app 14 is shown in Figure 5, in accordance with embodiments of the present invention. Firstly, the creator specifies, at Step 302, the position and layout of UI elements 106 within a new Configuration 12. For example, this specification can be performed by the creator dragging UI elements 106 in an empty canvas. The creator then specifies, at Step 304, the data that is required and should be obtained using one or more API requests 202, whereby the one or more API requests 202 allow the required data 13 to be retrieved from a server, or sent to a server, which in the embodiment shown in Figure 1 can be the config server 3. The Creator app 14 receives the creator inputs provided in Steps 302 and 304.

The Configuration 12 of the UI within the Creator app 14 comprises a UI Layer 100 and a Data Layer 200, both of which have been introduced above and are discussed in further detail below. The Creator app 14, updates, at Step 306, the Configuration 12 based on the UI Layer 100 and the specification of the position and layout of the UI elements by the creator. As part of this step, the Creator app 14 implements the UI Layer 100 for the Layout 108 of each Screen 104, for the list of Screens 104 within the Module 102 or app. The resulting Configuration 12 includes the Screens 104 and metadata for the app.

In addition, the Creator app 14 updates, at Step 308, the Configuration 12 based on the Data Layer 200 and the specification of the data required in respect of the one or more API requests 202. As part of this step, the Creator app 14 implements the Data Layer 200. Subsequently, the Creator app 14 generates, as Steps 310 and 312, Configuration 12 for the UI Layer 100 (including the UI element properties such as types, appearance, layout, screens) and the Data Layer 200 (including the API model), respectively.

Next, the creator connects, at Step 314, the relevant UI elements 106 to the desired API data items 202. The Creator app 14 receives the creator inputs provided in Step 314. Subsequently, the Creator app 14 updates, at Step 316, the data path of each APIL data item in the UI Layer 100. Each time a UI element is to appear on the page, the Creator app 14 fetches the API data and provides, at Step 318, the required API data item based on the specified data path.

The Creator app 14 then quantifies (converts), at Step 320, the UI Layer 100 and the Data Layer 200 into a Configuration 12 and stores the quantified Configuration on the configuration server 3. For example, the Creator app 14 can generate a JSON configuration for the app and store the JSON configuration on the server. For speed of loading, the JSON configuration is stored as raw binary data on the configuration server 3. Following this, the Creator app 14 publishes (makes available), at Step 322, the configuration. One further step (not shown in Figure 5, as it is not part of the configuration creation process), is the creation of the different generators 18a, 18b, 18c and storing them on the data store 6 of the App server 5 e.g. Apple's App Store or Android's Google Play Store, on behalf of the app creator. These generators 18a, 18b, 18c then become available for download at the respective devices 7, 8, 9. It is also to be appreciated that the creator can use a creator app 14 on a new device (different to that of the creator device 2) to preview the published configuration.

### Use of Configuration by App User

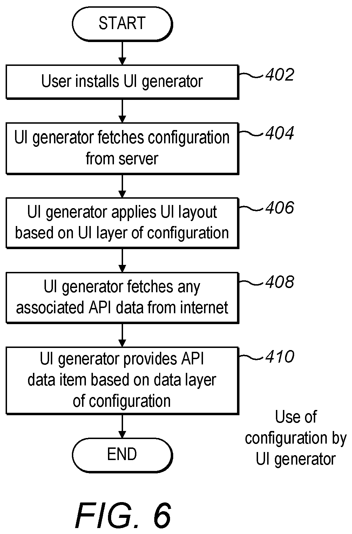

Once the generator 18a, 18b, 18c has been published on an app store 5, it can be used by an app user on their device 7, 8, 9. A method of using a generator 18a, 18b, 18c and the configuration 12 created using the method shown in Figure 5 will now be described with reference to Figure 6.

Firstly, the user installs, at Step 402, the UI generator 18a, 18b, 18c. Different versions of the UI generator 18a, 18b, 18c may be available depending on the type of device being used, e.g. phone, tablet, PC. The UI generator 18a, 18b, 18c fetches, at Step 404, the quantified Configuration 12 from the server. In this embodiment, the Configuration 12 is obtained via a HTTPS web request from the configuration server 3. As has been mentioned previously, the Configuration is typically between a few Kilobytes up to 1-2 Megabytes in size and, accordingly, is relatively small which facilitates faster data transfer of the Configuration file to the user device 7, 8, 9. The Configuration 12 is stored on the user device 7, 8, 9, typically in a designated space for the application's (generator's) documents.

In an embodiment an HTTP/HTTPs request is used to pull and post raw binary data between a device 7,8,9, and the Configuration server 3 (also referred to as a 'backend system'). Those raw data, among other things, can represent encoded text in the form of JSON or XML. These are the primary and standard file formats that are used throughout computer systems to represent data in a human readable form.

When the creator app 14 wants to send configuration data to the backend system, it converts the Configuration Model being created into JSON format and then encodes it into raw binary data and sends that data to the backend system with an HTTPs request. Conversely, when a generator 18a, 18b, 18c wants to fetch the Configuration 12 from the configuration server 3, it creates and executes an HTTP request and receives raw binary data. Those received data are then converted to JSON format text, which is then converted to the version of the Configuration 12 which can be understood by the specific generator 18a, 18b, 18c running in it specific operating system (native computing environment). This is the reverse process of the previous step of sending data to the Configuration Server 3).

A configuration can be stored in any format on the config server 3. For example, it could be stored as a JSON file. Alternatively, the Configuration 12 might be stored in a database on the configuration server 3 in the format of the database. Regardless of the way the configuration server stores the configuration 12, the communication between the user device 7, 8, 9 will be the same as described above, namely using a raw binary data. For example, if the configuration server 3 stores the configuration in a database, the configuration server will fetch the data from the database, convert the data to JSON format, then to the JSON format data into raw binary data and then send it to the Generator 18a, 18b, 18c in response to a request from that Generator.

The Configuration 12 is fetched each time the user opens the application so that the latest changes can be displayed. Steps can be taken to determine if an existing Configuration on the device, has changes and only then fetch the updated configuration and this is explained below.

Each local configuration can have a property that is of type string and contains the hash key (SHA-2 https://en.wikipedia.org/wiki/SHA-2 ) of the changeset of the current revision. Namely, the Hash represents the current version of the Configuration file on the device. When a request for the latest version of the Configuration file is made, the hash key is also transmitted to the Configuration Server 3. At the server, the hash key is compared with a hash key which has been generated of the latest stored version of the configuration in the data store 4, namely the hash of the latest version of the Configuration. If the hashes are different then the latest Configuration will be pulled from the data store 4 and provided as a response to the request from the user device 7, 8, 9. However if they are the same then there is no need to send back a copy of the configuration file as the user device already has the latest version. In this case, the Configuration server 3 just indicates this in the response to the user device,
As has been mentioned above, the Configuration 12 is fetched from the configuration server 3, in the form of raw binary data which then are translated to JSON format and then converted to a Configuration model that the generator 18a, 18b 18c uses to create the GUI. JSON is one of the most commonly used types of data representation in web/mobile environments.

The UI generator 18a, 18b, 18c then applies, at Step 406, the UI layout based on the UI Layer 100 of the Configuration 12. The UI generator also fetches, at Step 408, any associated API data 13 from the Internet, in this embodiment data 13 which is stored on the configuration server 4, though any other sources of specified available data can be used. Lastly, the UI generator provides, at Step 410, the API data item 204 based on the Data Layer 200 of the Configuration 12.

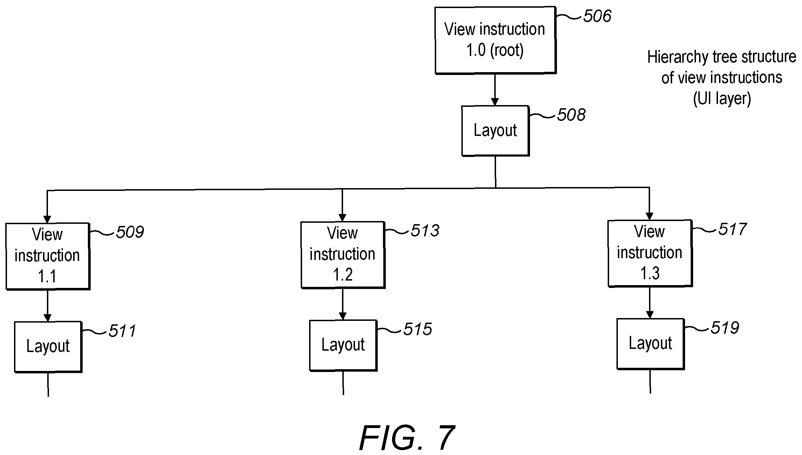

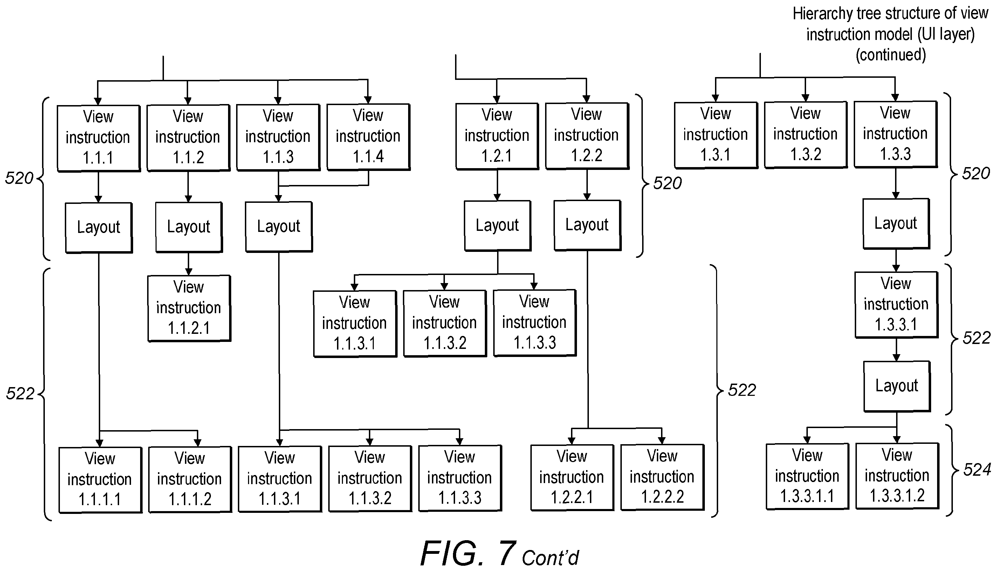

The components of the UI Layer 100 and the Data Layer 200 will now be described in further detail with reference to Figures 7 to 12.

### Hierarchy tree structure of View Instructions (UI Layer)

Figure 7 illustrates an exemplary hierarchy tree structure of a View Instruction model 106 of the UI Layer 100. The Creator app 14 launches itself with a root Module and each Module has a root Screen in its flow. Each Screen has a root View Instruction 506. A tree of child View Instructions can be rendered and displayed recursively from the root View Instruction 506. Thus, all View Instructions except for the root View Instruction have a parent View Instruction and a parent Layout. Each View Instruction in the tree structure represents a UI element 106, and each View Instruction has a Layout.

As shown in Figure 7, in the present non-limiting embodiment, the root View Instruction 506 has a root Layout 508. The root View Instruction 506 comprises three first generation child View Instructions 509, 513, 517, whereby each of the first-generation child View Instructions 509, 513, 517 has its own Layout 511, 515, 519. In addition, each View Instruction in the tree structure has a unique identifier or tag that is derived from its position in the tree structure. Namely, the root View Instruction 506 has a unique identifier of 1.0. The first-generation child View Instructions 509, 513, 517 have tags of 1.1, 1.2 and 1.3, respectively.

Each of the three first generation child View Instructions (1.1, 1.2, 1.3) 509, 513, 517 comprises a plurality of second-generation child View Instructions and corresponding Layouts 520. The second-generation child View Instructions are associated with unique identifiers according to their position in the tree structure. For example, the second-generation child View Instructions stemming from the first-generation child View Instruction 1.1 have unique identifiers of 1.1.1, 1.1.2, 1.1.3 and 1.1.4. Two or more View Instructions may share the same Layout. For example, second generation child View Instructions 1.1.3 and 1.1.4 share a single Layout between them. Some View Instructions may not include their own Layout, for example second generation child View Instructions 1.3.1 and 1.3.2 do not include their own Layout. It is to be appreciated that a View instruction (parent) will have a layout if it has children view instructions, and the layout will be used to determine where the children are placed and how the co-exist within the parent's coordinate space in the user interface.

Some of the second-generation child View Instructions (1.1.1, 1.1.2, 1.1.3, 1.1.4, 1.2.1, 1.2.2, 1.3.3) comprise a plurality of third generation child View Instructions and corresponding Layouts 522. The third-generation child View Instructions are associated with unique identifiers according to their position in the tree structure. Furthermore, one of the second-generation child View Instructions (1.3.3.1) comprises a fourth-generation child View Instructions and corresponding Layouts 524.

The parent Layout of each child View Instruction, apart from the root View Instruction 506, defines the positioning of each child View Instruction with respect to its parent View Instruction. The Layout is responsible for the coordination and appearance of the View Instructions. The unique identifier is used to apply layout constraints between the parent View Instruction and the child View Instructions, and between siblings within the child View Instructions.

Using this unique identifying system, all UI elements can be accessed and mapped in a hierarchical tree structure and the layout constraints and their sizing behaviour can be specified without prior knowledge of the contents of the Screen itself. Use of this hierarchical structure and inheritance of layout constraints obviates the need to individually code the appearance of each element of the GUI.

### View Instruction UI element representation properties (UI Layer)

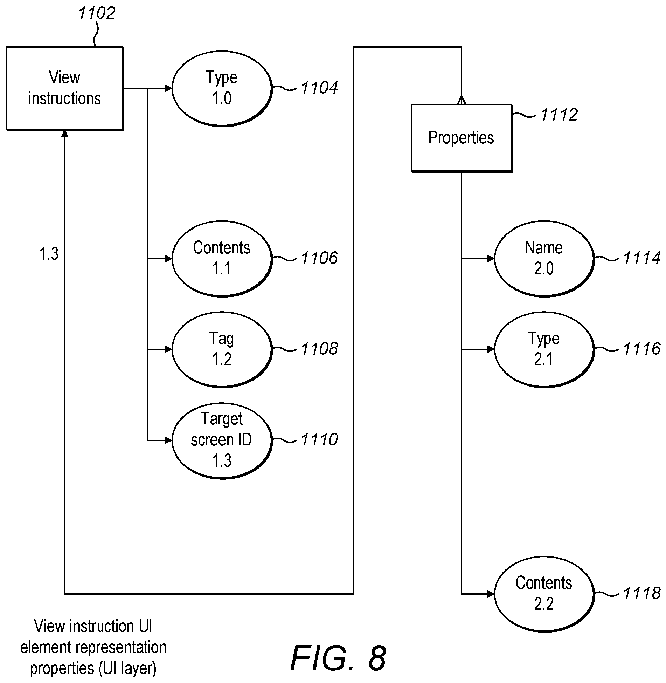

An exemplary View Instruction 106,1102 and its UI element representation is shown in further detail in Figure 8. The View Instruction 1102 comprises a View Instruction Type 1104. The View Instruction Type 1104 defines the kind of UI element to be represented by the View Instruction 1102 and is used by the Creator app 14 to create the UI element when the View Instruction 1102 is about to be displayed on the user device display. For example, the type of UI element may include, but without limitation to, any of the following: Label, Text Field, Text View, Button, View, Web Container, Horizontal List, Vertical List.

The View Instruction 1102 further comprises Contents 1106. Contents 1106 includes static text content that is defined upon creation of the View instruction 1102 by the creator of the Configuration 12. Contents 1106 may be used to populate the UI element represented by the View Instruction 1102 with text data or image data (see also Contents 907).

The View Instruction 1102 also includes a Tag 1108. The Tag 1108 is a unique identifier, e.g. a unique integer, that defines the View Instruction 1102 in the View Instruction hierarchy (discussed above). The Tag 1108 is used to position the UI element in relation to its sibling UI elements and its parent UI element.

Furthermore, the View Instruction 1102 comprises a Target Screen Identifier 1110, or Target Screen ID 1110. The Target Screen ID 1110 is a unique identifier, e.g. a unique integer, that describes an optional Screen as navigation target. When a user-driven user interface interaction occurs on the generator 18a, 18b, 18c by a user, the method of the present embodiment searches for a Screen with the same identifier, and presents the new Screen in a navigation stack of the generator.

In addition, the View Instruction 1102 comprises a list of Properties 1112, or a 'Properties Model 1112'. The Properties model 1112 describes the appearance of the UI element represented by the View Instruction 1102. The Properties model 1112 is able to describe any UI element property that exists currently in a computer system. The system translates the UI element property 1112 and applies it to the UI element. The properties may be similar between different computer platforms and may be added/removed and adjusted based on the platform.

In some embodiments, most View Instruction Types 1104 share a list of common properties, but some Types of View Instruction 1102 may include properties that are specific to the UI element. As an example, the Label and Horizontal List View Instruction Types 1104 share the following common properties: background colour, border width, shadow. However, the Horizontal List View Instruction Type 1104 may also include properties unique to the UI element, e.g. selection style, headers/footers, show scroll indicators.

Each Property 1112 has a Name 1114, a Property Type 1116, and Contents 1118. The Name 1114 of the Property 1112 is displayed on the UI generator 18a, 18b, 18c. In embodiments, the Name 1114 cannot be edited by the creator of the Configuration 12. The Property Type 1116 provides a description of the Property 1112. Exemplary Property Types 1116 include, but are not limited to, the following: Background colour; Font; Border Width; Border Colour; Content Mode (for scaling purposes etc.); Corner Radius. As described in the previous paragraph, some Property Types 1116 may be unique to the UI element. Further examples of such unique Property Types 1116 may include: Text colour; Text alignment; Number of lines. The number of Property Types 1116 that can be present in the Configuration is unlimited and can vary from one computing device to another. The Contents 1118 comprise the value of the Property 1112 that is used when the computing device applies the translated Property 1112 to the UI element. The value of the Contents 1118 may comprise text, number, Boolean. Some text value Contents may be translated to define colour, font, or image such that the translated colour, font or image is applied to the UI element.

### View Instruction / Layout / Layout Instruction (UI Layer)

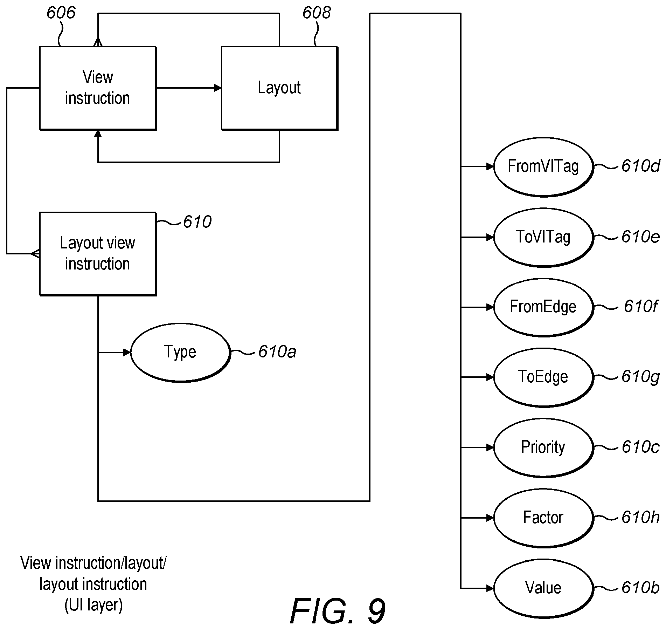

A View Instruction 106, 606 along with its Layout 108, 608 and Layout Instructions 110, 610 will now be described in further detail with reference to Figure 9. The relationship between a View Instruction 106, 606 and the layout and positioning of a UI element represented by the View Instruction 106, 606 when it is displayed on a display of the user device 7, 8, 9 is described, in accordance with embodiments of the present invention.

An exemplary View Instruction 606, analogous to that shown in Figure 3 as View Instructions 106, and its corresponding Layout 608, which is analogous to the Layout 108 shown in Figure 3, are shown in Figure 9.

The View Instruction 606 comprises a Layout 608. The Layout 608 is responsible for the coordination and appearance of the View Instruction 606. More specifically, the Layout 608 provides the information required for the positioning of the UI element representation of its View Instruction 606 within the coordinate system (boundary) of the UI element representation of the parent View Instruction. In some embodiments, the Layout 608 may have reference to a reusable View Instruction (not shown) if the Layout's parent View Instructions 606 is of collection type (a collection type is a horizontal or vertical scrollable list that displays a set of UI elements). The Layout 608 is linked to a plurality of child View Instructions.

In many cases when a View Instruction 606 is of collection type (i.e. horizontal or vertical list), the number of UI elements contained in that list can be large (actually the exact number is not known as this information is coming from an API data request 202). Therefore, the reusable View instruction is used to display those items in the layout of a collection View Instruction.

A simple example of a reusable View instruction can be seen on an email app on a smartphone. The email items have the same UI element (also referred to as a UI element container), with the same layout. That list has a specific UI container that is reused and displays different data for each email. Same logic applies on the Layout with its reusable view instructions.

The View Instruction 606 further comprises a Layout Instruction 610, or 'Layout View Instruction 610', or 'Layout Instruction model 610'. The Layout Instruction 610 includes information required from the Layout 608 to position the UI element that is represented by the View Instruction 606 correctly within its coordinate system, with respect to its parent UI element 606 and its sibling UI elements. The Layout Instruction 610 effectively applies a layout constraint on a view, e.g. to align, layout and display the View Instruction 606.

In the present embodiment, the Layout Instruction 610 indicates a Type property 610a, which is used to determine which UI layout constraint to apply to the UI element that is represented by the parent View Instruction 606. It is to be appreciated that whilst Figure 9 only shows a single Layout Instruction 610 associated with a View Instruction 606, typically this is one element of a list of Layout Instructions 610 as is shown in Figure 3. A layout instruction can be applied either solely on the view instruction or between two view instructions. If for example the layout instruction is of type "width" or "height" it will be applied to the view instruction itself. If on the other hand the layout instruction is of type top/leading/trailing/bottom/center, it is being applied to two view instructions, therefore the receiver is the second view instruction. Examples of the Type property 610a include but are not limited to the following: Top (top margin from the receiver); Leading (left margin from the receiver); Trailing (right margin from the receiver); Bottom (bottom margin from the receiver); Width (width of the UI element); Height (height of the UI element); CenterX (the margin from the x-axis of the receiver); CenterY (the margin from the y-axis of the receiver); EqualWidths (equal width to the receiver); EqualHeights (equal height to the receiver); Horizontal Margin (the horizontal margin from the receiver); Vertical Margin (the vertical margin from the receiver); and Aspect Ratio (the aspect ratio fraction to the size of the receiver).

The Layout Instruction 610 also indicates a Value property 610b, which has a numerical value. The Layout 608 uses the contents of the Value property 610b, e.g. 50 pixels, to apply the corresponding layout constraint to the UI element. The Layout Instruction 610 further comprises a Priority property 610c, which has a numerical value. The Priority property 610c indicates the importance level of the Layout Instruction 610 compared to other constraints, in case of a constraint conflict. The default value is 999. The system will not apply the conflicting layout constraint that has the lowest priority value.

The Layout Instruction 610 further comprises a FromVITag 610d, or From View Instruction Tag 610d, which is the identifier of the View Instruction 606 that the layout constraint is to be applied to. The Layout Instruction 610 further comprises a ToVITag 610e, or To View Instruction Tag 610e, which is the identifier of the target View Instruction 606 for the Layout Instruction 610. The FromVITag represents a View Instruction (its tag) and the ToVITag the receiver View Instruction. The ToVITag 610e applies only to certain types of Layouts, such as leading, trailing, top, bottom, horizontal/vertical, margins, aspect ratio, etc.

The Layout Instruction 610 further comprises a FromEdge property 610f, which indicates the type of edge from which the layout constraint is to be applied. For example, the type of edge may be top, left, right or bottom. Also, the Layout Instruction 610 comprises a ToEdge property 610g, which indicates the type of edge from which the layout constraint is to be applied. For example, the type of edge may be top, left, right or bottom. It is to be appreciated that the FromEdge and ToEdge properties both provide information on which edge of the receiver the layout instruction constraint is applied to. For example, a layout instruction of leading is applied between two View instructions, A and B. The layout instruction will have FromEdge the right edge of A and ToEdge the right edge of B.

The Layout Instruction 610 further comprises a Factor property 610h, which has a numerical value. The Layout 608 uses the value of the Factor property 610h to multiply the value of the receiver's constraint, to obtain a value for the layout constraint to the be applied. The default value is 1. The Factor property 610h may be applicable to certain types of constraints, e.g. width, height, or aspect ratio.

The UI element representations of the plurality of child View Instructions will be placed within the Layout's 608 parent UI element representation, using the information is that provided by the corresponding Layout Instructions 610.

### Structure of API/URL models (Data Layer)

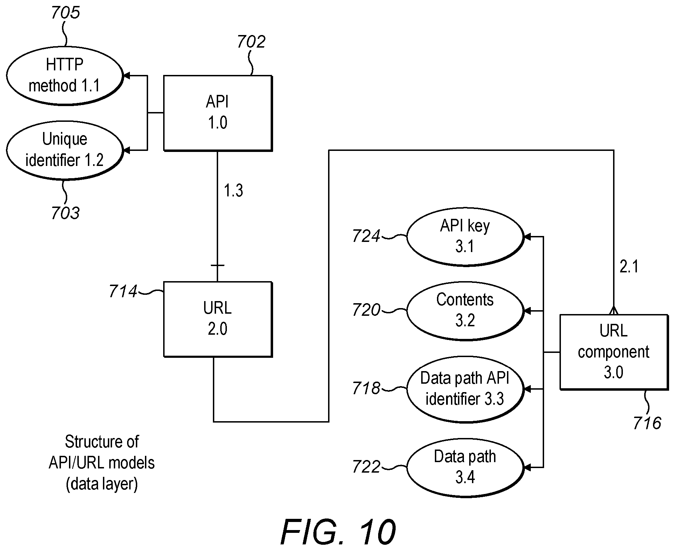

The structure and properties of the API model and the URL model of the Data Layer 200 will now be described in further detail with reference to Figure 10.

The Data Layer 200 comprises an API model 202, 702, a URL model 214, 714, and one or more URL components 216, 716. The Data Layer 200 may comprise a plurality of API models 202, 702. Each API model 702 comprises the information required from any programming language to construct a URL request that will fetch the requested data from any server that the creator of the Configuration 12 has access to. Properties of the API model 702 are as follows. The API model 702 describes a Hypertext Transfer Protocol (HTTP) method 705, which is a request-response client-server protocol. This HTTP method is used by the URL request to send a request message to a HTTP server, and in turn to receive a response message. The HTTP method can include, for example, 'GET' (retrieve data), 'PUT' (retrieve and store data), 'POST' (accept the data for storage). The API model 702 also describes a Universal Unique Identifier (UUID) 703. The UUID is a random 128-bit number that is generated to specify an API model uniquely in the Configuration. The UUID is used to cache the data that is returned once a URL request has been executed using the API model 702.

The API model 702 has a one-to-one relationship with the URL model 714. The URL model 714 provides the URL information necessary to fetch the required data and thereby includes a reference to a web resource. The URL model 714 constructs the required URL using a plurality of URL components 716. The URL components 716 comprises the data that forms a URL. Namely, the URL components 716 include: (i) an API Key 724; (ii) Contents property 720; (iii) a Data Path API Identifier 718; and a Data Path 722.

The API Key 724 is used to specify the type of data that is included in the Contents property 720 and will be part of a URL in the format: "https://www.example.com/?<API Key>=<Contents>".

The Contents property 720 comprises any form of text data that is required to create a URL request. This data can be provided by manual input by the creator of the Configuration 12. Alternatively, this data may be provided to the Contents property 720 from the system when using the Data Path 722 and Data Path API Identifier 718 properties.

The Data Path API identifier 718 is used to identify the response from a request that has already been executed or to trigger a new request for the API with the corresponding response from an already executed request. The creator of the Configuration 12 can include multiple URL requests in a chain of URL requests, and data from a first URL request can be used to construct a subsequent second URL request. In some embodiments, the first and second URL requests may be constructed simultaneously. Alternatively, the first and second URL requests may be constructed on different UI Screens. In this example Screen 1 can create and execute a URL request. The data will be cached within the application (generator). When Screen 2 is displayed its API will generate a second URL request using data provided by the first URL's response which are cached, using the Data Path API Identifier 718.

The Data Path 722 is provided as input to the URL component. The Data Path 722 is a text description of the path of the API response associated with a particular Data Path API Identifier 718.

### API Model (Data Layer)

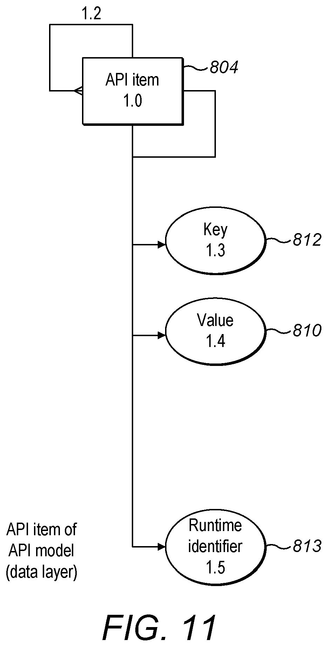

Once a URL request has been made and the data from its response has been received, the data is mapped into an API Item model 804, or 'API Item 804', which is analogous to the API Item model 204 shown in Figure 4. The properties and usage of an API item in relation to the UI and Data layers will now be described in further detail with reference to Figure 11.

The API Item 804 is used by the View Instruction 606 to display data in a UI element. The API Item 804 describes any type of data structure that can be sent to or received from an external database or a URL request. For example, the API Item 804 may describe data structures such as lists, has tables, trees, or linked lists.

The API Item 804 comprises a Value property 810 and a Key property 812. The Value property 810 indicates the type of the API Item 804. The following types can be used: text, numeric, Boolean (true/false), List (collection) or Hash Table (collection). If an API Item 804 has a value of type List or Hash Table, then the API Item 804 comprises child API Items. The View Instruction 606 uses the Value property 810 of an API Item 804 and displays the content of the API Item 804 in the UI elements represented by the View Instruction 606. The Key property 812 is a text property that is populated in the event that the parent API Item has a Value property 810 of a Hash Table. The Key property 812 is used to create the Data Path. In use, the Key property 812 of a list API Item 804 will be used when the View Instruction 606 is of a collection type (horizontal or vertical). For a regular API item, the Data path value 810 will be calculated recursively towards the parent until a parent is a list (that key will not be included on the data path).

If the Value property 810 is of type List (collection) or Hash Table (collection), the API Item 804 can include a plurality of child API Items (not shown in Figure 11), and any child API Item has a reference to its parent API Item. This creates a recursive tree structure. View Instruction 606 uses a Data Path to populate the represented UI element with data according to the Data Path. The Data Path uniquely identifies a specific API Item within the data structure. It should be noted that a root API Item 804 will not have a parent API Item 804.

The API Item 804 further comprises a Runtime Identifier 813. This is a random 128-bit number that is generated to specify uniquely an API Item 804 when the View Instruction 606, with which its Data Path is associated, uses functionality that is described by a Feature (Features are discussed in detail below). For example, a Basket Feature requires the Runtime Identifier 813 to uniquely identify the items that have been added to a basket and are selected for display in a basket list screen.

### API Model - Example (Data Layer)

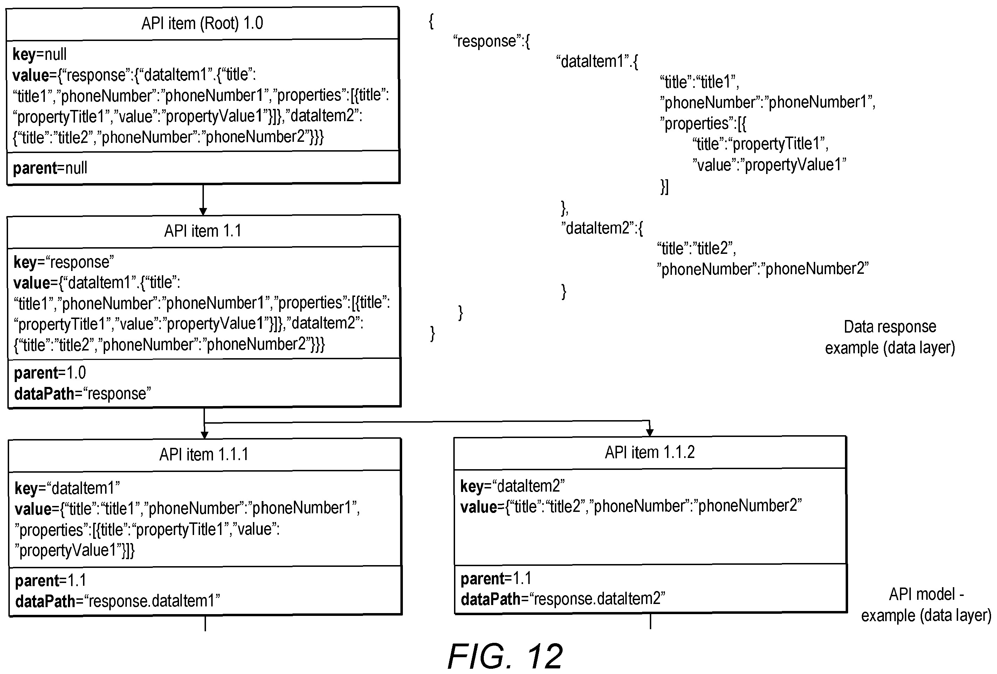

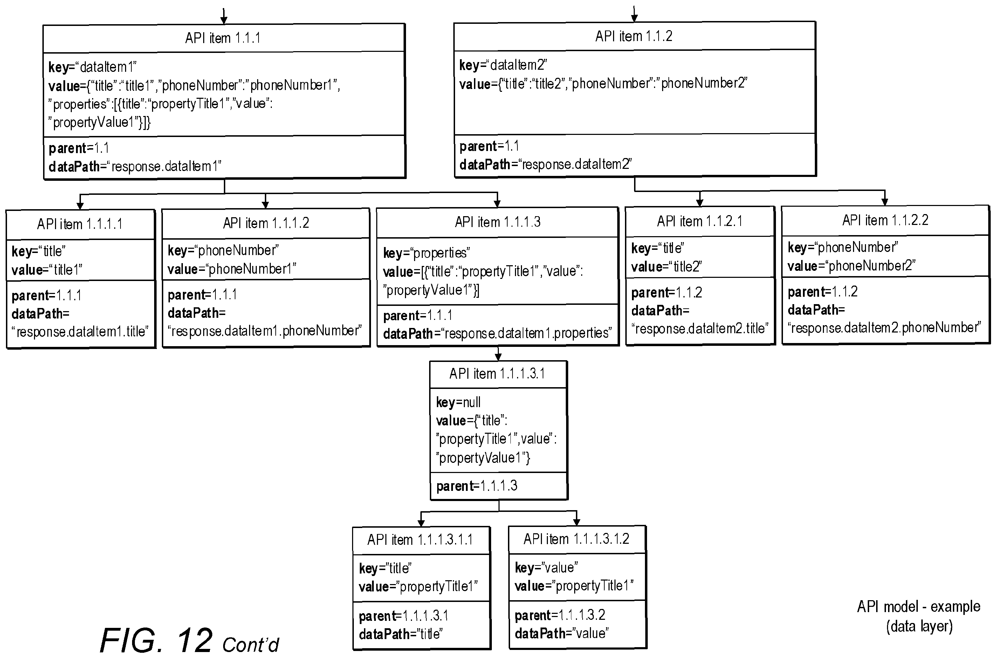

An example of the API Item tree data structure described above is shown in Figure 12.

Any data response from a URL request is mapped onto an API Item tree as shown in the example. The data responses may be in JSON or XML format, or any alternative suitable data format. As an example, a data response in JSON format is shown.

More specifically, Figure 12 explains how JSON data are converted to APlltem models. A JSON structure has a root element which is either dictionary or an array of dictionaries, which have keys and values. These values can be of type text, numeric or key-value dictionaries or arrays of key-value dictionaries, and so on.

This gets translated to the API model which has key values (which can be empty/null) and children (if the value is a dictionary or an array of dictionaries). If the APlltem has a key and a value that is of type text or a number, that means that the APIItem is a leaf on the data structure tree and has no children. If the APIItem's value is of type dictionary or array of dictionaries, then the APlltem will have children APIItems.

Each APlltem has a runtime identifier property which is used to uniquely identify the specific instance between any that have been generated in the runtime of the application.

### Relationship between UI Layer and Data Layer

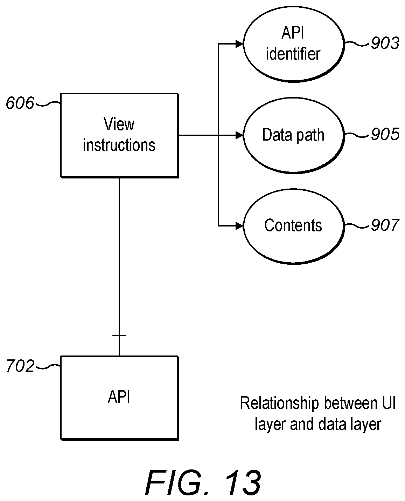

As outlined above, a View Instruction 606 represents a UI element. The View Instruction 606 comprises properties that represent the appearance of the UI element, including several properties that relate to the Data Layer 200. As shown in Figure 13, properties of the View Instruction 606 that relate to the Data Layer 200 include an API Identifier 903, a Data Path 905, and Contents 907. The API Identifier 903 is a UUID property that is used by the View Instruction 606 to indicate which API 702 the View Instruction 606 is expecting to receive data from. The Data Path 905 is a text property that describes the path of the data that is provided in the API response, whereby the API is associated with the API Identifier 903. Contents 907 is a text property that is used by the View Instruction 606 to populate the UI element with data that is not provided from an API model. The data may be text data or image data.

### Process: UI Layer and Data Layer

In the present embodiment, a plurality of View Instructions 106, 606 are represented on the display of the user device as UI elements. If any of the View Instructions comprises an API Identifier 903, the generator in combination with the Configuration 12 first searches, at Step 1002, the cache of received API responses from any previous API requests for an API response associated with the API Identifier 903. The cache comprises a list of received responses from previously executed API requests. The Creator app determines, at Step 1004, whether a cached API response associated with the API Identifier 903 has been located. If a cached API response associated with the API Identifier 903 is located, then the process continues to search, at Step 1006, for the API Item 204 that matches the contents of the Data Path that is included in the API response. The Creator app then applies, at Step 1008, the contents of the API Item 204 to the UI Element that is represented by the View Instruction.

However, if a cached API response associated with the API Identifier 903 is not located at Step 1004, then the process continues to search, at Step 1010, available APIs in the Configuration for an API associated with the API Identifier 903. The generator determines, at Step 1012, whether an API associated with the API Identifier 903 has been found. If an API associated with the API Identifier 903 is found, then the process continues to execute, at Step 1014, the URL request that is described by the API found in Step 1012. The generator then receives and caches, at Step 1016, the response that is received as a result of the URL request. The generator then proceeds to perform the process from Step 1006, namely behaving as if the cached response had been found. If a matching API is not found at Step 1012, the process continues to Step 1018, and the application (generator) applies the value that is on the "contents" property of the View Instruction for that UI element. It is to be appreciated in this regard that each UI element upon its creation by the creator has a default value on the property "contents" which can be changed by the creator from within the application. If after Step 1012 no matching API is found, then the contents of the UI element will have the value which is stored on the "contents" property.

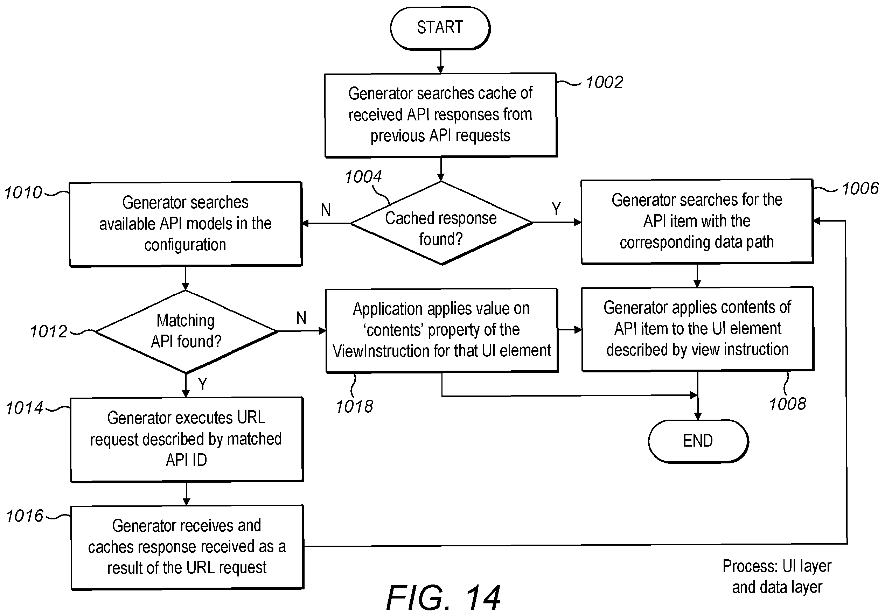

At the end of the process shown in Figure 14, the contents of the API Item 204 are applied to the UI element that is represented by the View Instruction. If the UI element is a text container, a text content is applied to the UI element. If the UI element is an image container, the contents of the API Item are used to generate an image URL request for the image data. Once the requested image data is received, the received image content is applied to the UI element. If the UI element is a list container, the Value property 810 of the API Item 804 is used and if the Value property 810 has a list type, then the list of items contained in the Value property 810 is applied to the UI element. Each item in the list is passed onto the reusable View Instruction and the process shown in Figure 14 is repeated recursively for the tree structure of the View Instructions.

### Application Configuration Model

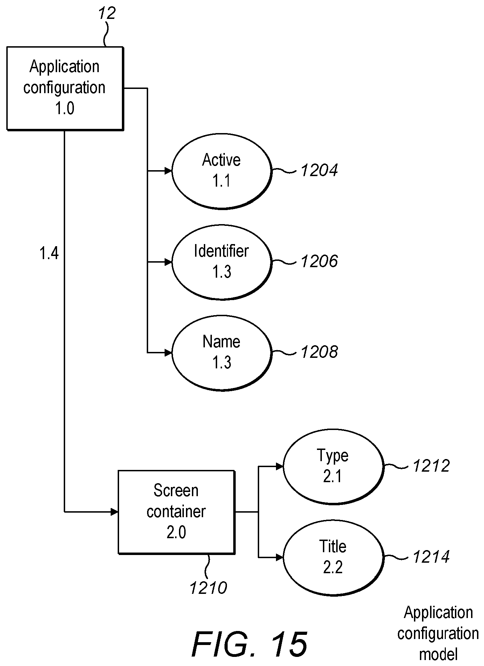

The Configuration 12, which may also be referred to as the Application Configuration, or Configuration File, that is created by a creator using the creator app 14, and that is subsequently executed by the UI generator 18a, 18b, 18c to generate Configuration model instance (or Application Configuration model instance) which in turn is used to generate a UI, will now be described in further detail with reference to Figure 15. The Configuration 12 comprises all of the information that is required by the UI generator 18a, 18b, 18c to generate the Configuration model instance which in turn defines the UI. In this embodiment the Configuration 12 is stored in a data store 4 of the configuration server 3, though it could be stored on any server so long as the generators 18a, 18b, 18c know where to access it. Accordingly, the Configuration 12 is accessible by the creator app 14 as well as all of the UI generators 18a, 18b, 18c, as described above with reference to Figure 1. The creator may create multiple Configurations 12 using different accounts of the same creator app 14, and switch between the Configurations 12 as appropriate.

The Configuration 12 comprises an Active property 1204, an Identifier property 1206, and a Name property 1208, as shown in Figure 15. The Active property 1204 describes whether the Configuration 12 is the active one amongst all of the Configurations 12 that the creator has created using the creator app 14. The Active property 1204 also describes the Configurations 12 that are accessible by the UI generators 18a, 18b, 18c. The Identifier property 1206 is a unique identifier that describes a specific Configuration 12 among all of the Configurations 12 that the creator has created using the creator app 14. The Name property 1208 comprises a name that describes the Configuration 12, whereby the name is defined and editable by the creator for the purpose of distinguishing between Configurations 12 easily.

The Configuration 12 further comprises a Screen Container 1210. The Screen Container 1210 is a model that describes the container of the root or default Screen 104 of a Module 102 (see Figure 3), as well as the navigation type between Screens 104 of the Module 102. The navigation types vary between different user device types and operating systems. Whilst the Configuration is usable universally by all devices, the types will be interpreted differently on the different operating systems. An example would be that a navigation type of "push", on iOS would cause a screen to appear from the right onto a navigation stack and on Android would cause a screen to overtake the current screen as a presented overlay. A navigation container (not shown) is used to describe the navigation types. The Screen Container 1210 comprises the information that is required to generate the correct navigation container in which the Screen 104 will exist when the Screen 104 is displayed in the UI of the particular user device 7, 8, 9.

Each Screen Container 1210 comprises a Type 1212. The Type 1212 of the Screen Container 1210 varies between different operating systems and the navigation types between the different operating systems. The Type 1212 is therefore described by the corresponding navigation container. By way of non-limiting examples only, the Type 1212 of the Screen Container 1210 may include a Navigation Bar or a Tab Bar.

Each Screen Container 1210 further comprises a Title 1214. The Title 1214 comprises a title that describes the Screen Container 1210, whereby the title is defined and editable by the creator for the purpose of distinguishing between Screen Containers 1210 easily.

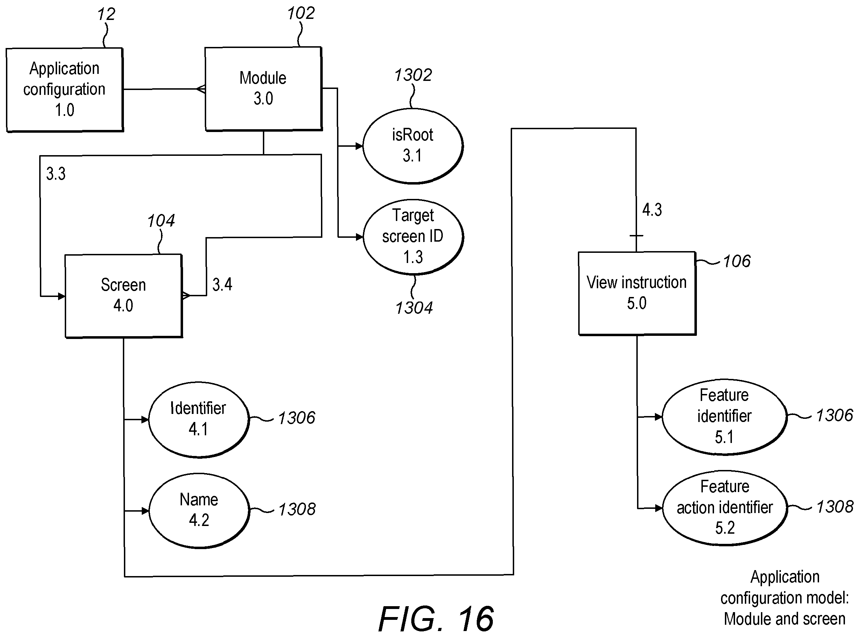

Figure 16 shows the Module 102 and the Screen 104 of the Configuration 12 in further detail. The Module 102 is a model that describes a logic group of Screens 104. A Configuration 12 may have multiple Modules 102. A Screen 104 can redirect to another Screen 104 associated with the same Module 102 or to another Screen 104 that is associated with a different Module 102. The Module 102 comprises a Boolean property 1302, referred to as 'isRoot 1302' in Figure 16, that describes whether the Module 102 is the root Module of the Configuration 12. The root Screen of the root Module will be the first Screen 104 to be rendered and displayed on the UI when the UI is generated by the UI generator 18a, 18b, 18c. Accordingly, when a Module 102 is started or where the Module 102 is the root Module of the Configuration 12, the root Screen will be displayed. The Module 102 further comprises a Module Name 1304 that describes the Module 102, whereby the Module Name 1304 is defined and editable by the creator for the purpose of distinguishing between Modules 102.

In the present embodiment, there is an unordered list of Screens 104 within the logic group of the screens of the Module 102. The Screens 104 are created by the creator using the creator app 14. The Screens 104 can redirect to other Screens 104 within the same Module 102, or to Screens 104 of different Modules 102 within the same Configuration 12. The Screen 104 is a model that contains all the information that is needed for a UI generator 18a, 18b, 18c to display the contents of the Screen 104 on the UI. Each Screen 104 comprises a root View Instruction property. The root View Instruction property is used to display the view hierarchy tree of the UI elements in the Screen 104, as described above with reference to Figure 7.

Each Screen 104 comprises an Identifier property 1306. The Identifier 1306 is a UUID, e.g. 128-bit UUID, that uniquely identifies the Screen 104. The Identifier property 1306 is used for the purpose of navigating between Screens 104. Namely, the Identifier property 1306 is used by the View Instruction 1102 as a Target Screen Identifier 1110, as shown in Figure 8, when the UI element that is represented can have user interactions, such as tap or swipe. Furthermore, each Screen 104 comprises a Screen Name 1308 that describes the Module 102, whereby the Screen Name 1308 is defined and editable by the creator for the purpose of distinguishing between Screens 104.

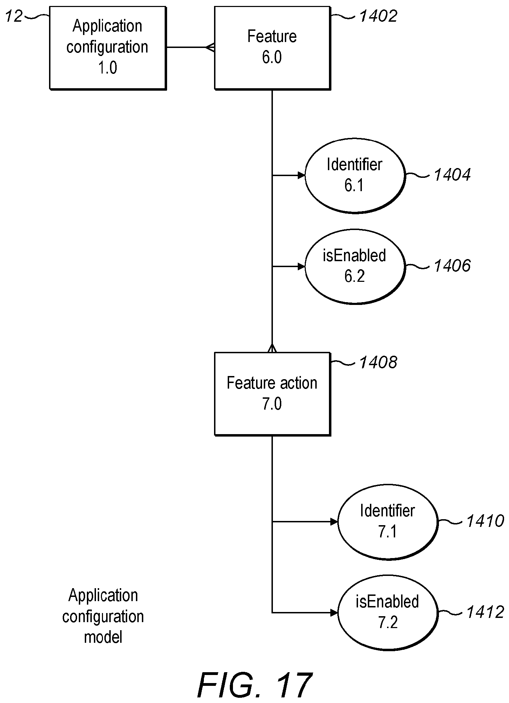

Each Screen 104 further comprises a single root View Instruction that is used to display the UI elements when the Screen 104 is first displayed. Each View instruction 106 comprises a Feature Identifier 1310 and a Feature Action Identifier 1312. The Feature Identifier 1310 comprises a unique identifier that represents each Feature type. The Feature Action Identifier 1312 comprises a unique identifier that represents each Feature Action type. The View Instruction 106 uses the Feature Identifier 1310 and the Feature Action Identifier 1312 to determine the functionality of the UI element that is represented by the View Instruction 106. Features and Feature Actions are discussed below with reference to Figure 17.

As shown in Figure 17, the Configuration 12 comprises a plurality of Features 1402 and a plurality of Feature Actions 1408. A Feature 1402 is a model that represents a logic component that can be enabled or disabled on a Configuration 12 by the creator of the creator app 14. The Feature 1402 provides a certain closed functionality to the UI generator 18a, 18b, 18c. By closed functionality, it is meant a pre-defined business logic that is currently not available for modification. Certain Feature Actions of that feature can be turned on or off if they are not critical for the feature. An example would be a Payment feature which has the following functionalities: 1. Basket list, 2. Add/Remove products, 3. Checkout, 4. Previous Order, 5. Add payment option, etc. The Feature 1402 is configurable by the creator and is predefined. An example of a Feature 1402 is a Basket feature, which enables a user of the UI generator 18a, 18b, 18c, which is provided as a downloadable application for the user device, to add items or products to a basket and then to 'checkout' by performing a payment transaction to pay for the items in the basket.

Each Feature 1402 comprises a Feature Identifier 1404 and a Boolean property 1406, also referred to herein in as 'Feature isEnabled 1406'. The Feature Identifier 1404 is a UUID, e.g. 128 bit UUID, that uniquely identifies the Feature 1402. The Feature Identifier 1404 is shared with all Configurations 12 and is used to determine which of the logic groups will be used when a Feature 1402 is enabled and used within a View Instruction 106 to display a certain functionality. The 'Feature isEnabled' 1406 property describes whether a Feature 1402 is enabled and thus whether the Feature 1402 can be used within a UI representation of a Configuration 12.

A Feature Action 1408 is a model that describes a piece of functionality within a logic group that is described by a Feature 1402. As with the Feature model 1402, the Feature Action 1408 is predefined and can be enabled or disabled by the creator. Any Feature Actions 1408 that are enabled can be used by a View Instruction 106 to perform a certain functionality (e.g. showing items of a basket as described above) or to perform a certain action (e.g. adding items to a basket as described above).

Each Feature Action 1408 comprises a Feature Action Identifier 1410 and a Boolean property 1412, referred to herein as 'Feature Action isEnabled 1412'. The Feature Action Identifier 1410 is a UUID, e.g. 128-bit UUID, that uniquely identifies the Feature Action 1408. The Feature Action Identifier 1410 is shared with all Configurations 12 and is used to determine which of the logic groups will be used when a Feature Action 1408 is enabled and used within a View Instruction 106 to display or perform a certain functionality. The Feature Action isEnabled 1412 property describes whether a Feature Action 1408 is enabled and thus whether the Feature Action 1408 can be used by a View Instruction 106.

### Use Case (screenshots)

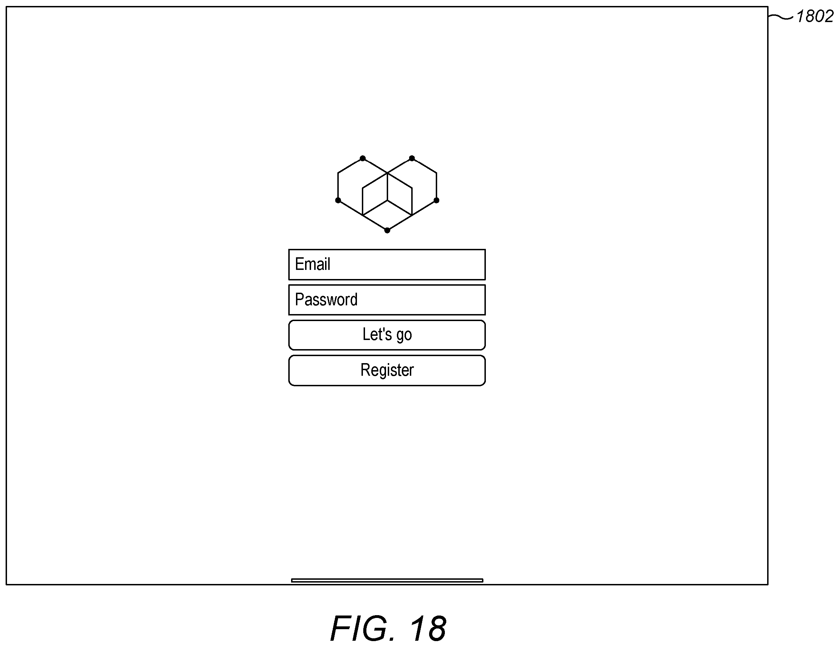

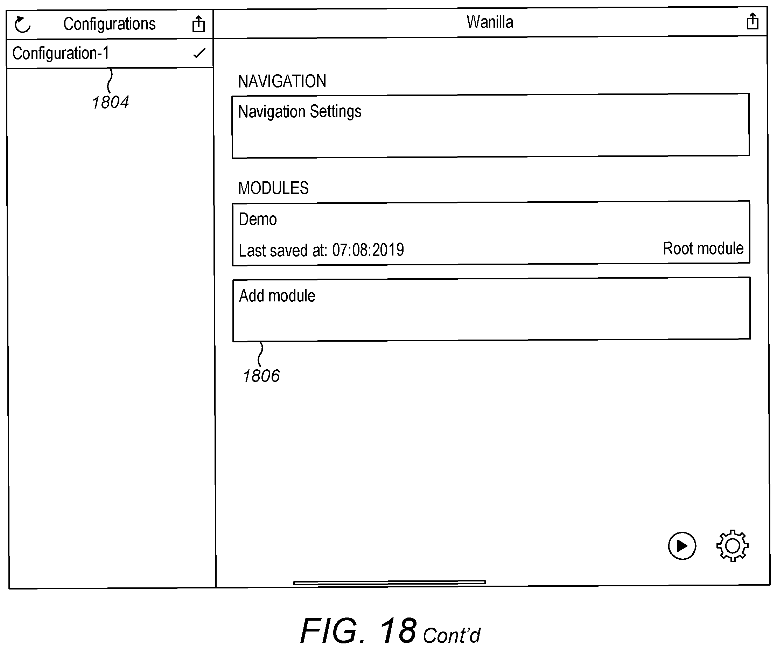

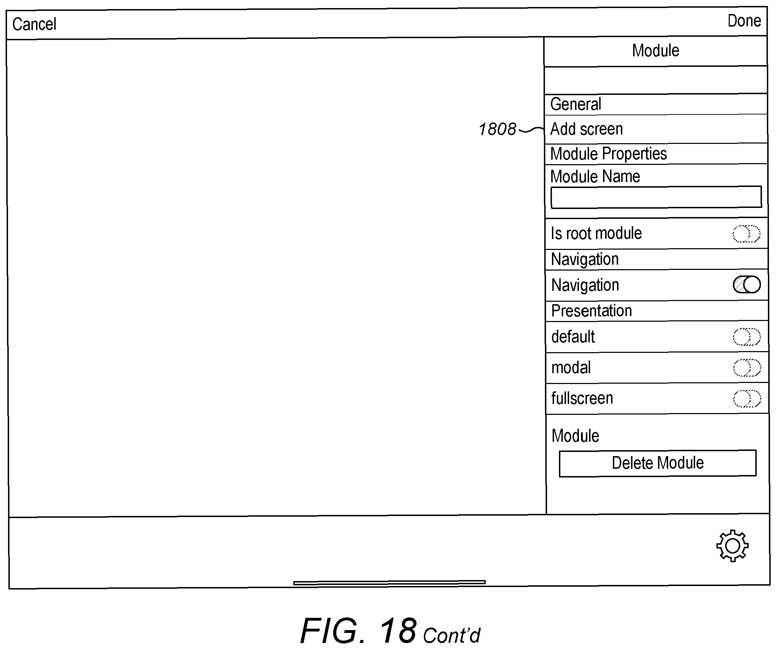

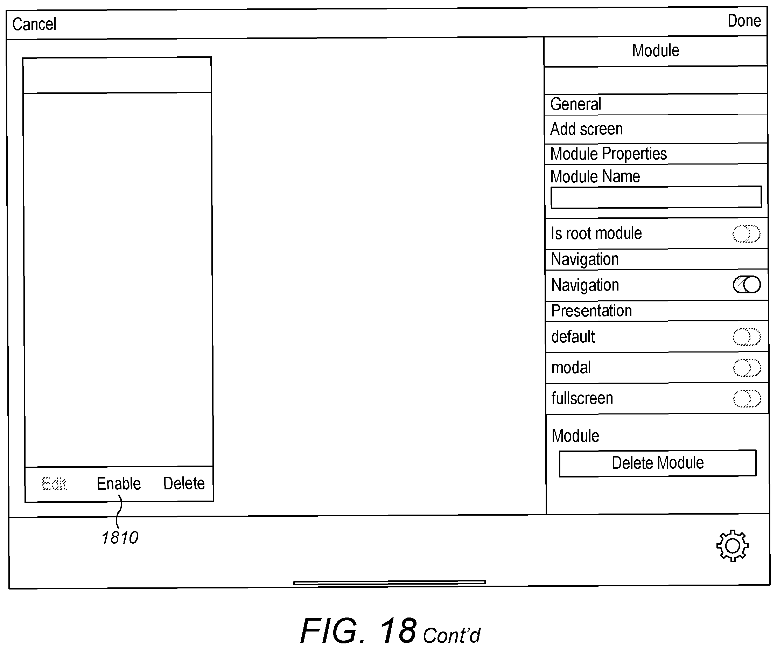

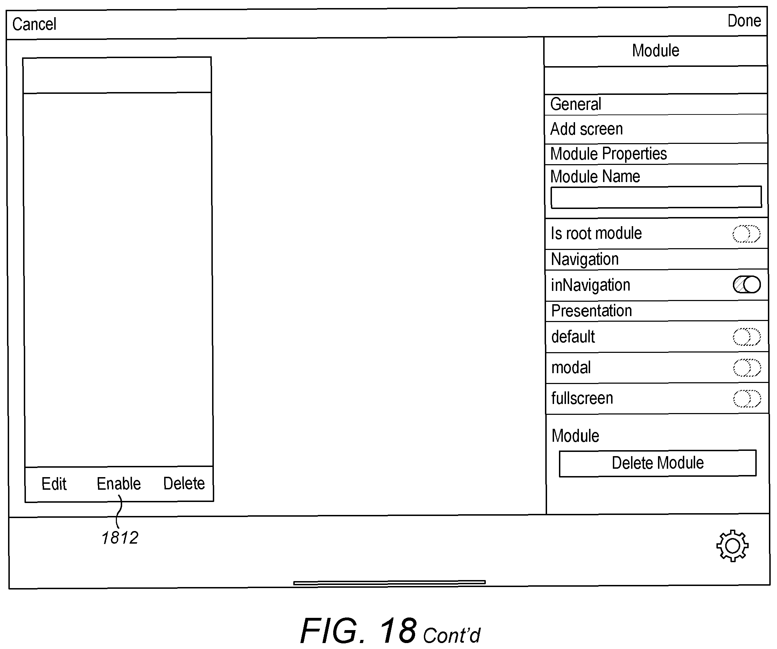

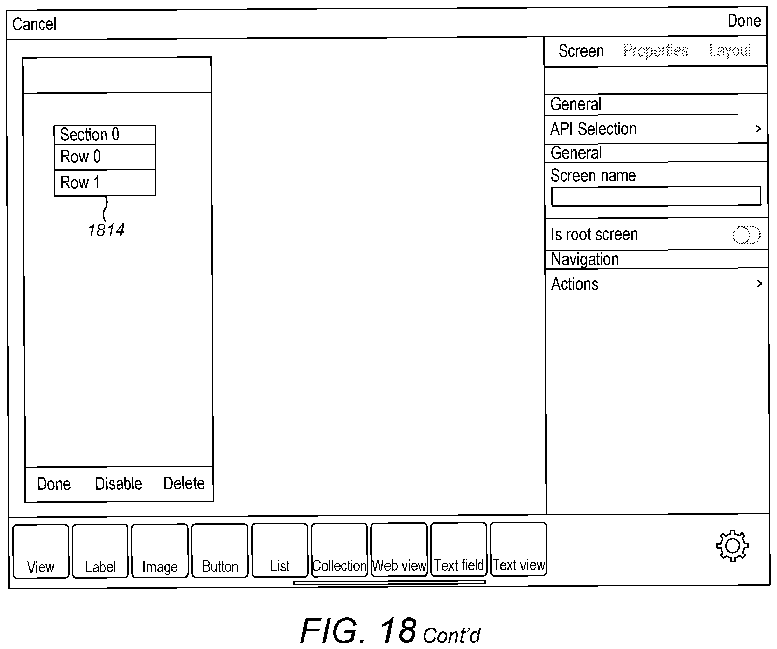

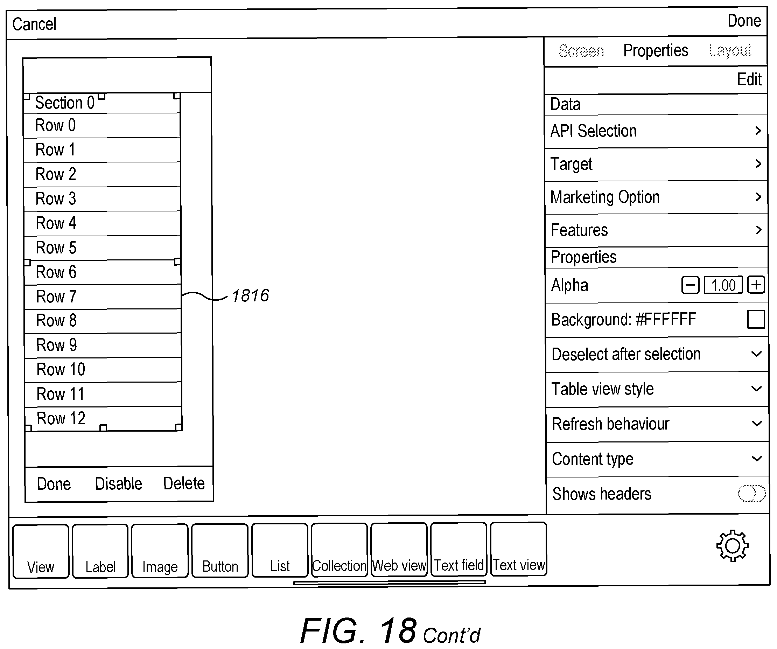

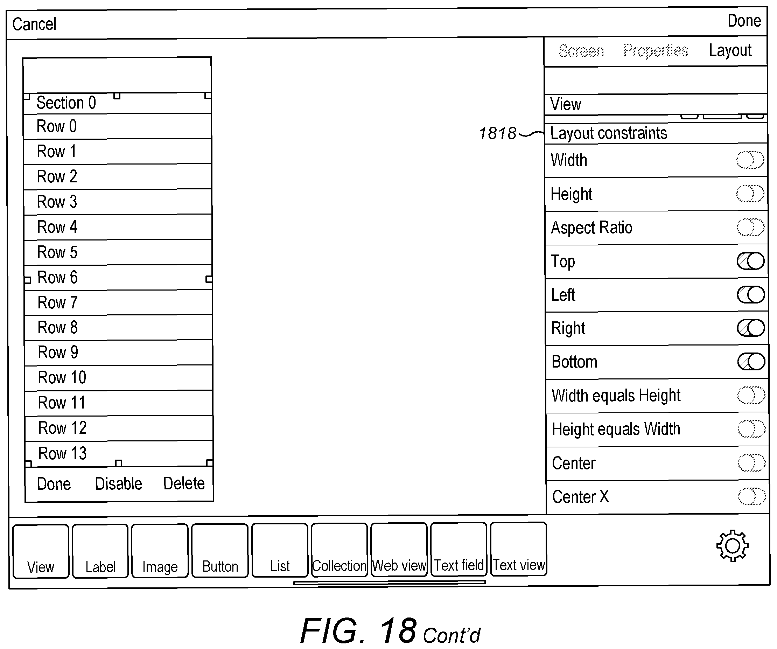

Figures 18 to 22 show a series of screenshots depicting steps that a creator may take whilst using the creator app 14. Examples of how the creator can use the creator app 14 on the creator device 2 to specify or design a GUI 16 having a particular layout of graphical elements 17 and to specify the data which is to be pulled into the GUI 16 are shown. The specification of the GUI is thus provided in the Configuration 12. Therefore, the creator app 14 functions to enable relatively easy creation of GUIs by creators who have no previous programming knowledge.

The creator begins by downloading the creator app 14 from the application server 5 (in this embodiment) onto the creator device 2. As shown in Figure 18, the creator logs in, at Step 1802, via a Login page. The creator then selects, at Step 1804, a Configuration 12 ("Configuration-1"). The creator then adds, at Step 1806, a Module 102 to the Configuration 12. After a Module 102 has been added, the creator adds, at Step 1808, a Screen 104 to the Module 102. In order to add UI elements to the Screen 104, the creator selects, at Step 1810, the "Enable" option on the Screen 104. If desired, the creator can select, at Step 1812, the "Disable" option on the Screen 104 to prevent any further UI elements from being added to the Screen 104.

In "Enable" mode, the creator then drags, at Step 1814, a UI element from a list of available UI elements onto the Screen 104. The selected UI element is of a UI element type which has been selected from a commonly used element types (such as Label, Image Container, Text Field, Button, etc.). The creator then drags, at Step 1816, the edges of the selected UI element to resize it. Once the UI element has been created, the creator applies, at Step 1818, layout constraints to the UI element. For example, the creator can specify the width, height and/or aspect ratio of the UI element. The creator can also specify that the UI element is aligned with the top, left, right and/or bottom edges of the Screen 104 (as shown in Figure 18), or specify that the width of the UI element should equal its height, or vice versa, or apply a layout constraint to position the UI element at the center of the Screen 104.

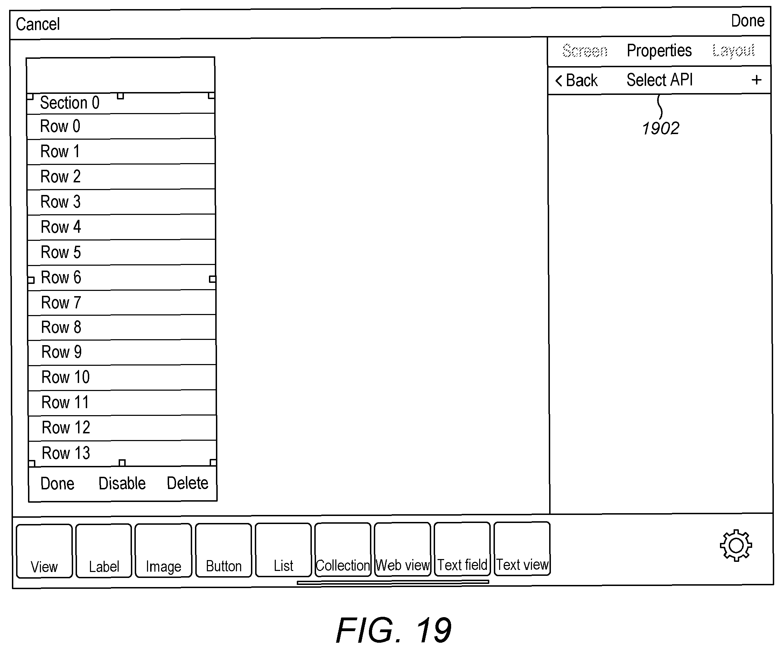

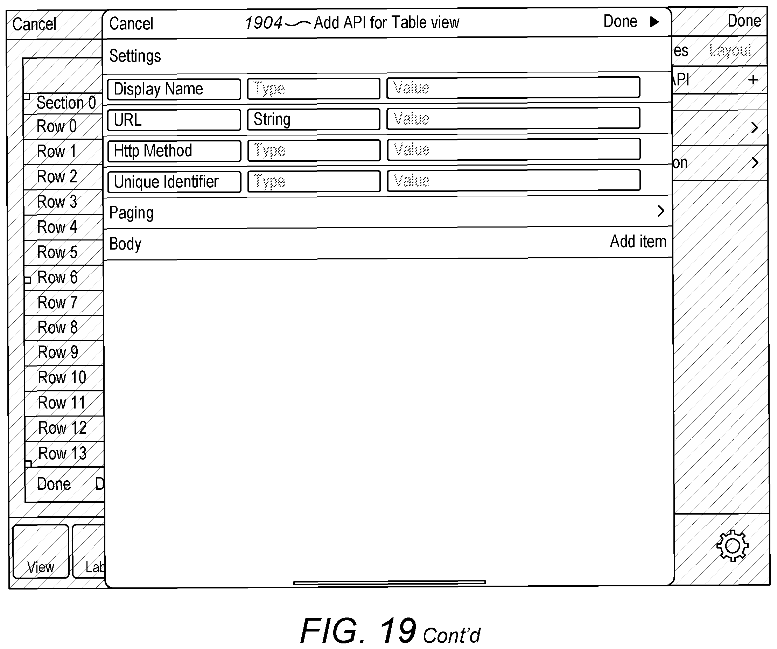

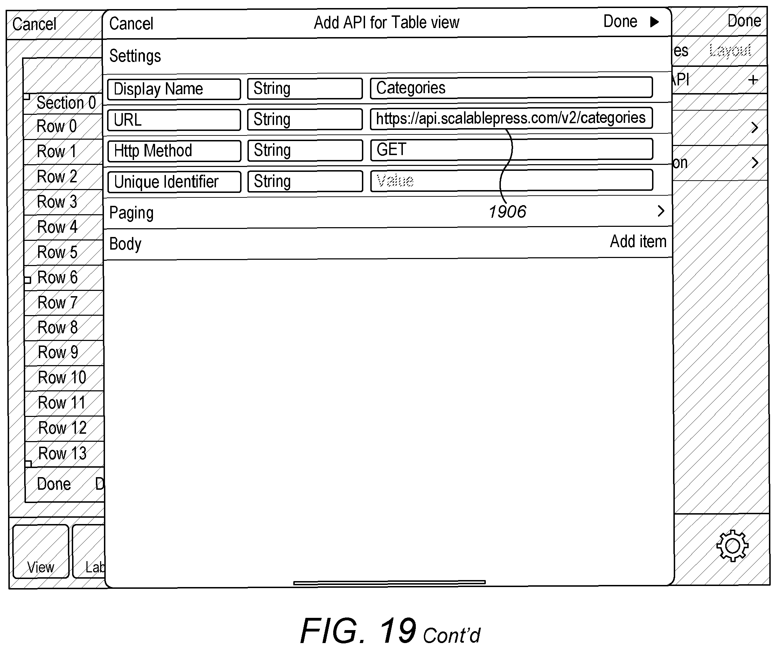

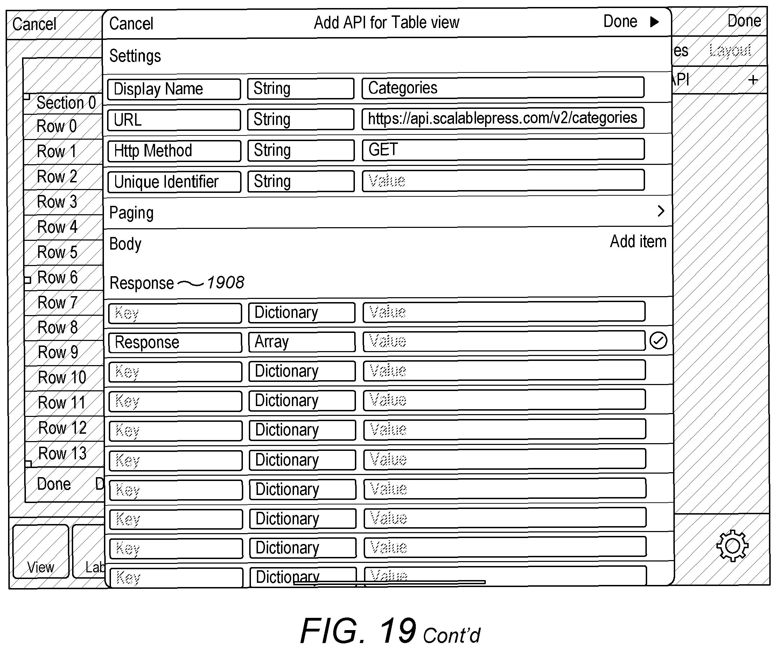

Once the layout constraints have been applied, the creator enters, at Step 1902, the API selection area of the creator app 14, as shown in Figure 19. At this stage, the creator adds, at Step 1904, an API request. As part of adding the API request, the creator defines, at Step 1906, API input parameters, such as a URL. The creator then executes, at Step 1908, the API request and receives a API response accordingly.

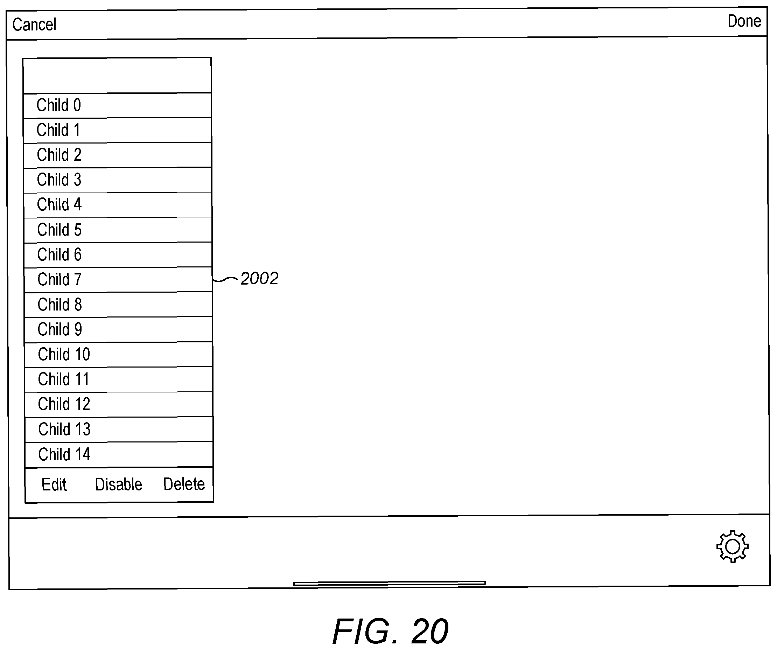

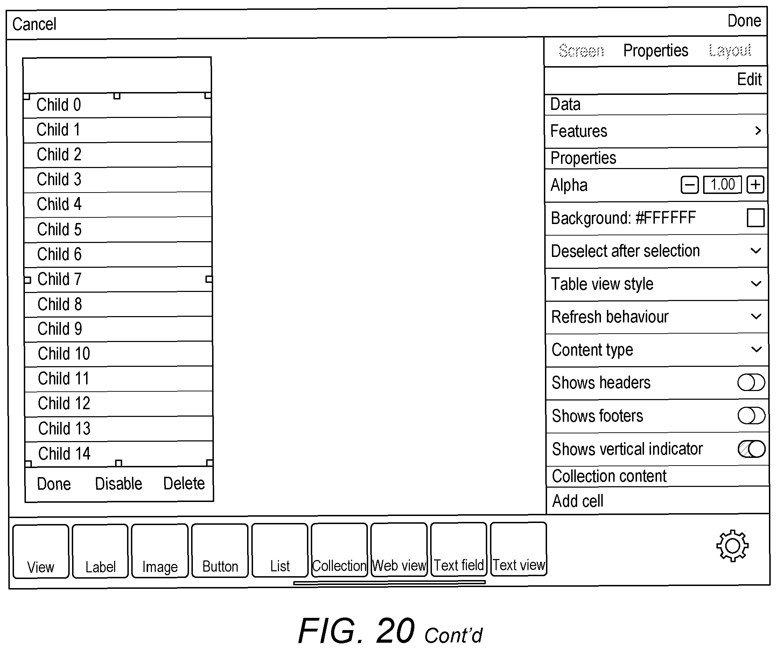

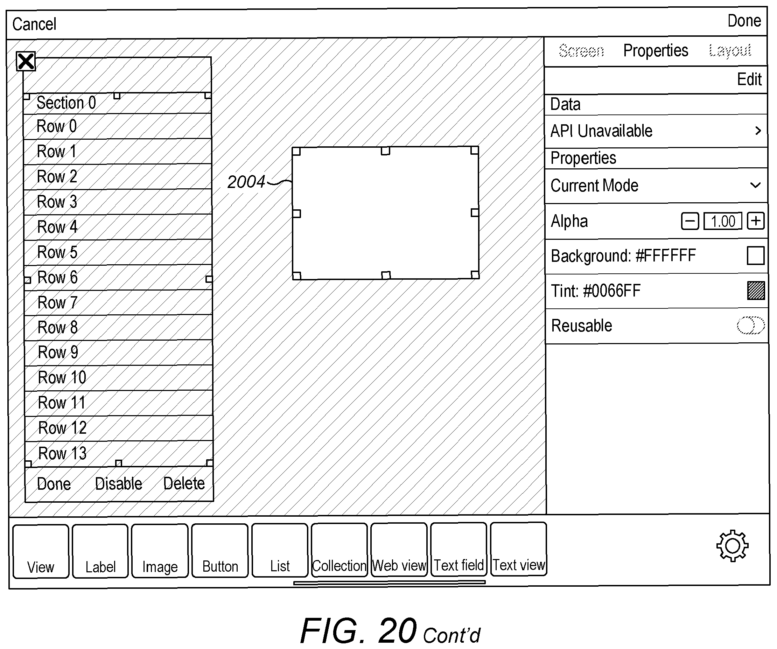

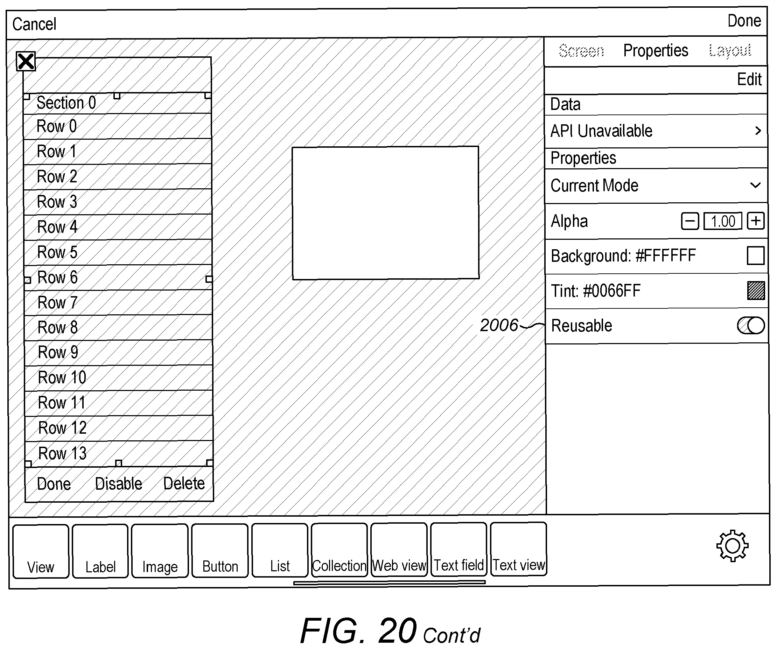

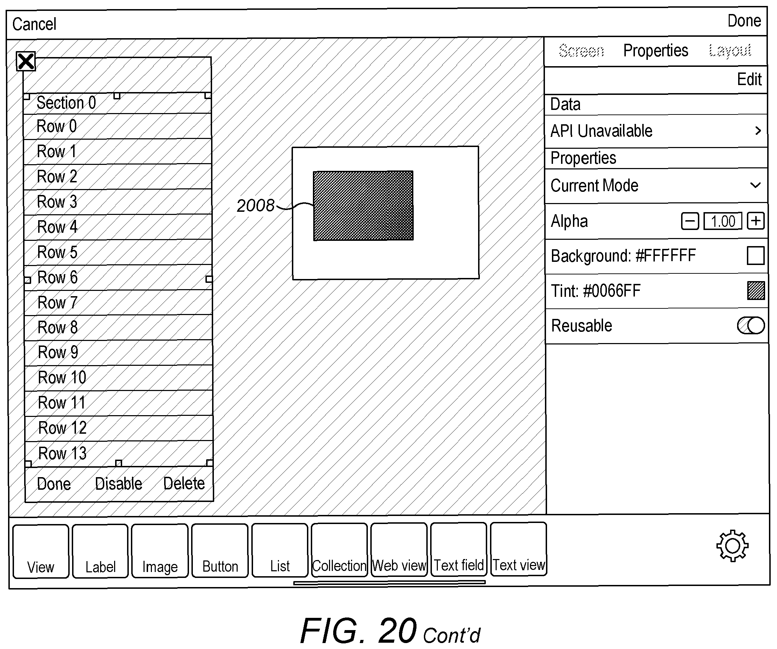

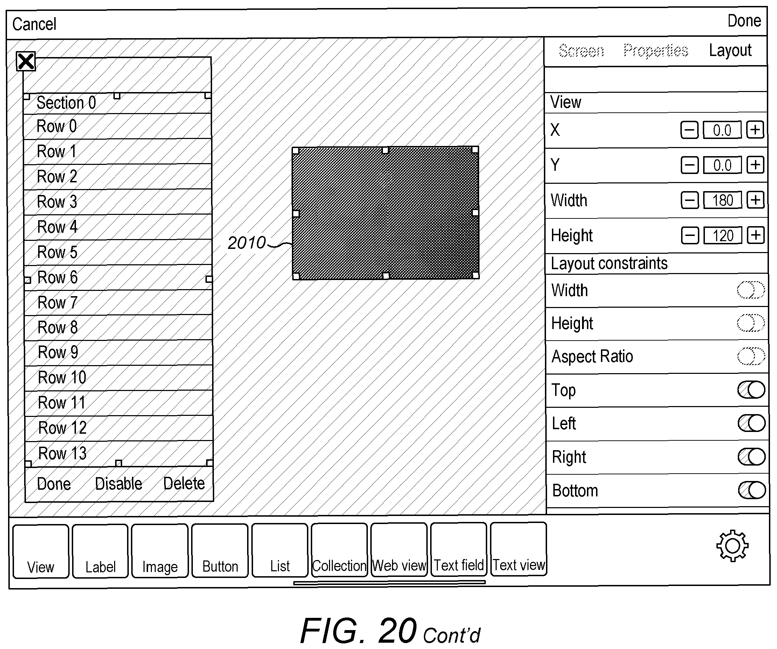

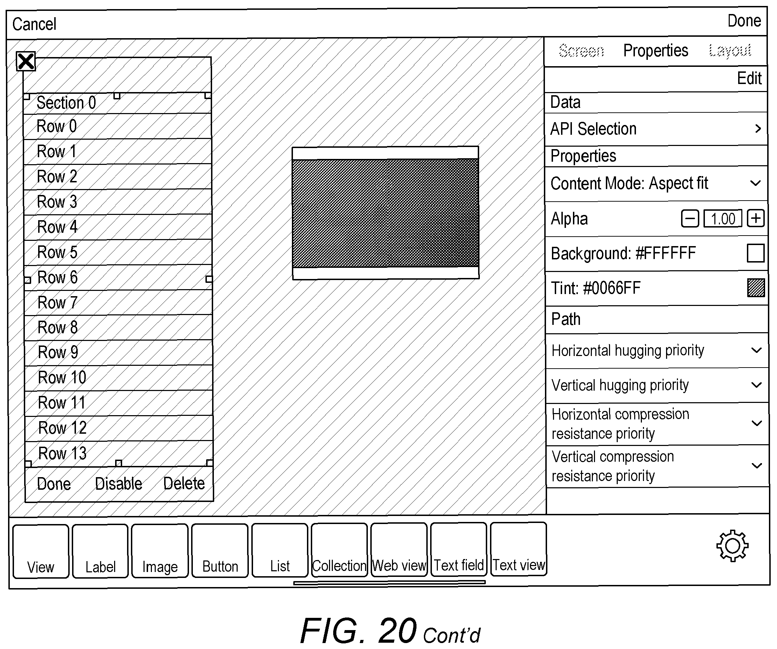

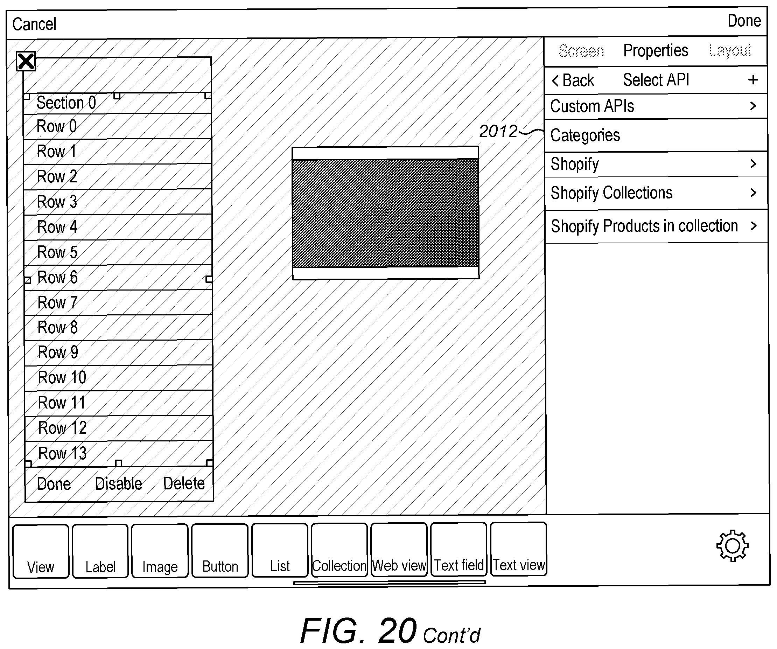

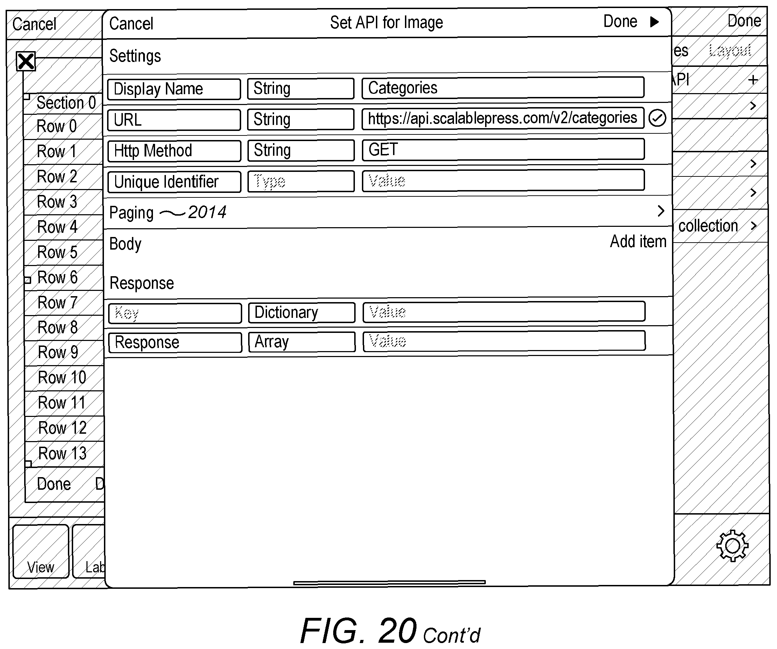

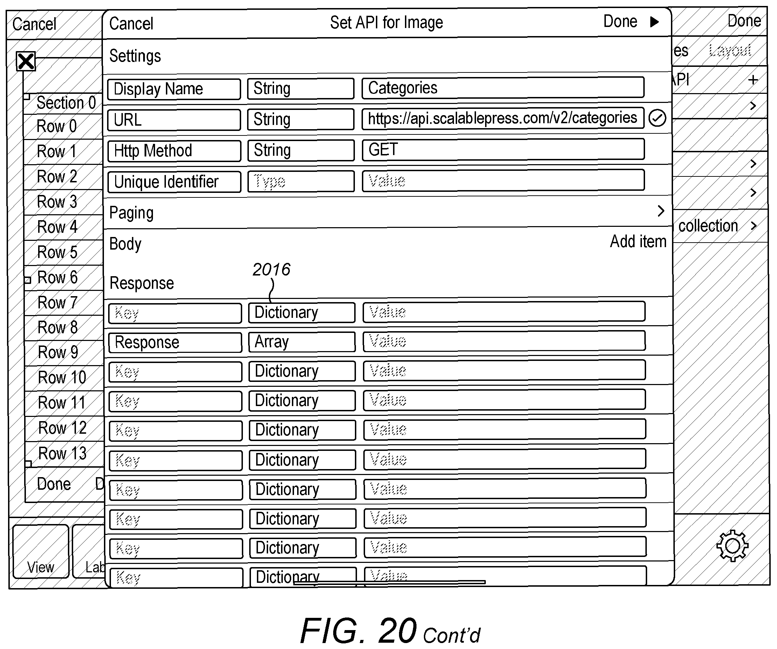

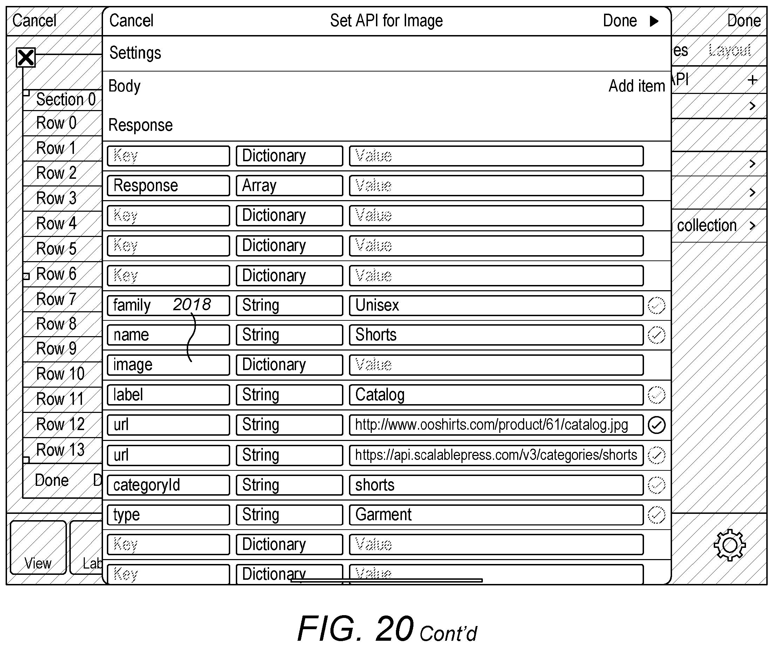

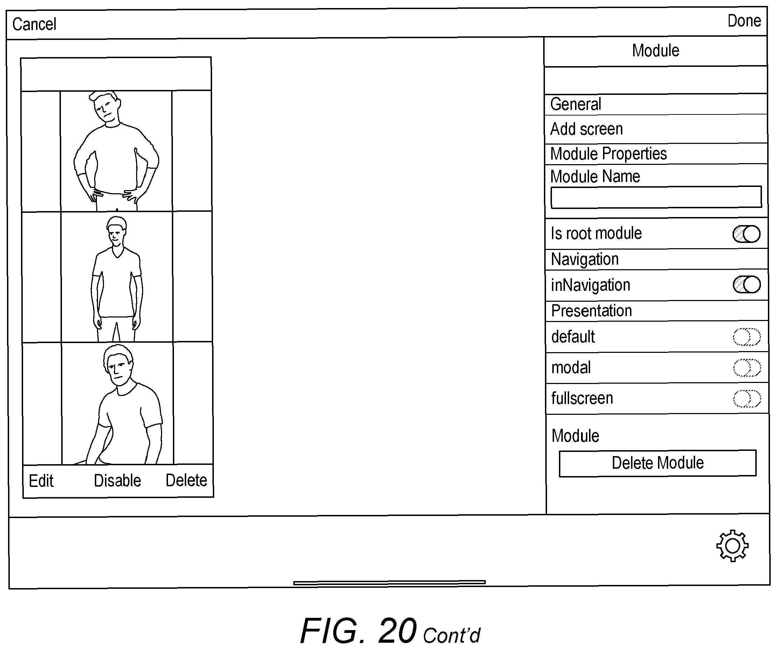

As shown in Figure 20, the data is then presented as a list 2002 within the Screen. The creator then adds, at Step 2004, a reusable View Instruction and enables, at Step 2006, the reusable View Instruction such that UI elements can be included within it. Next, the creator drags, at Step 2008, an image UI element into the reusable View Instruction, and applies, at Step 2010, layout constraints to the image UI element in order to resize it as desired.

The next step for the creator is to select the API for the image UI element and simultaneously set up the View Instructions properties. The creator selects, at Step 2012, an API from stored API configurations. The creator then executes, at Step 2014, the selected stored API configuration. After receiving the API response, the creator expands, at Step 2016, the API response. From the API response data, the creator selects, at Step 2018, the API item for image contents, such that the image data can be used within the reusable View Instruction, as shown in the next screenshot.

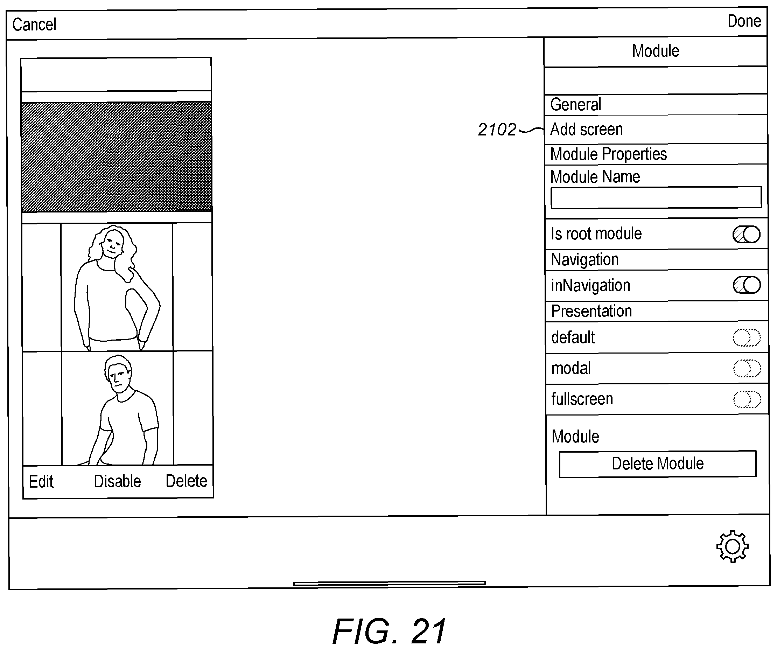

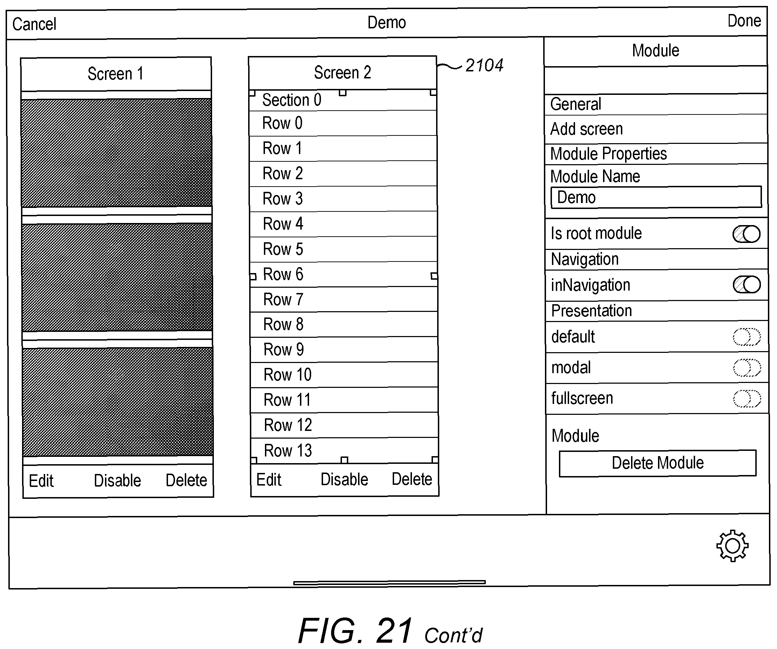

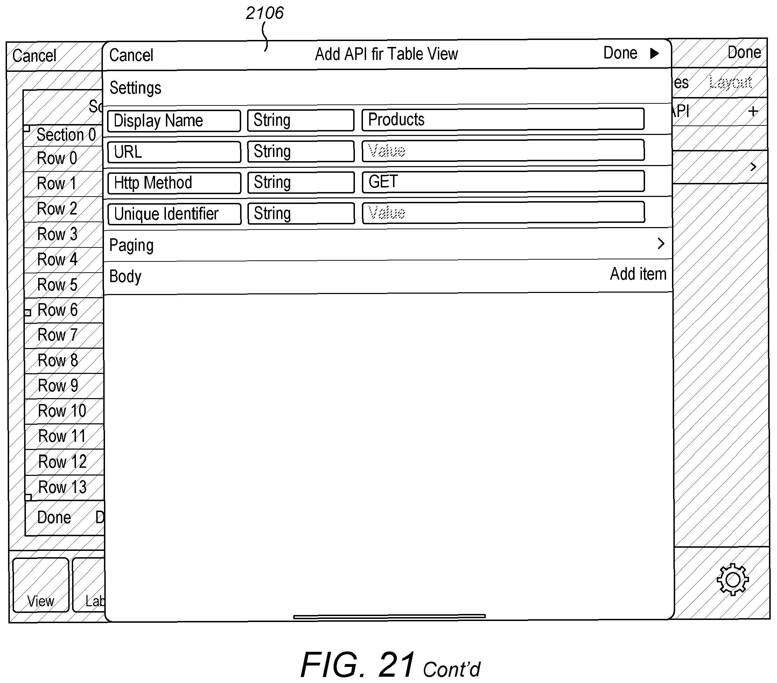

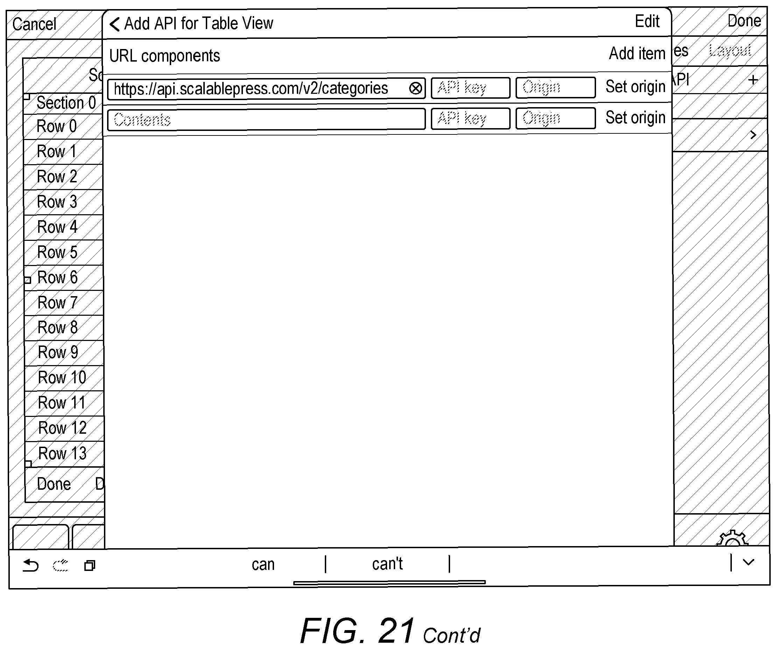

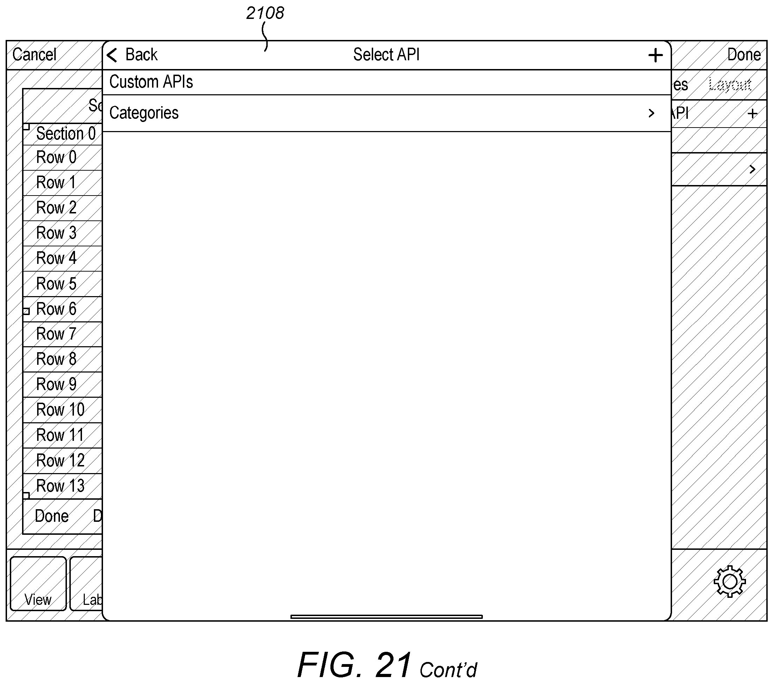

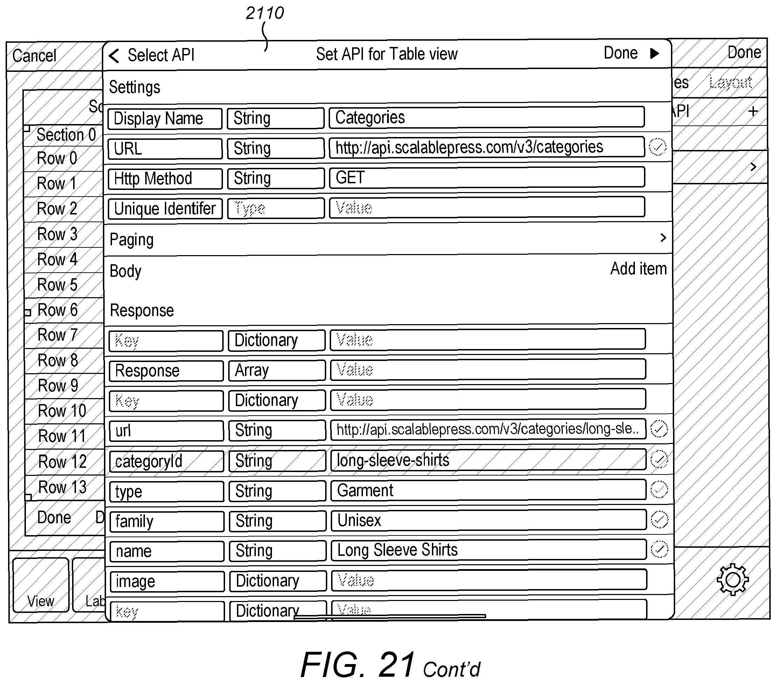

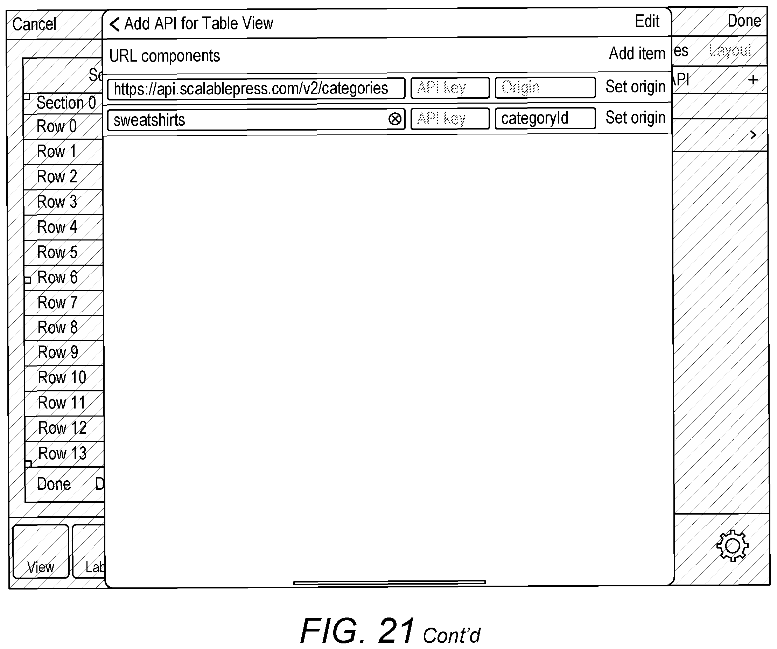

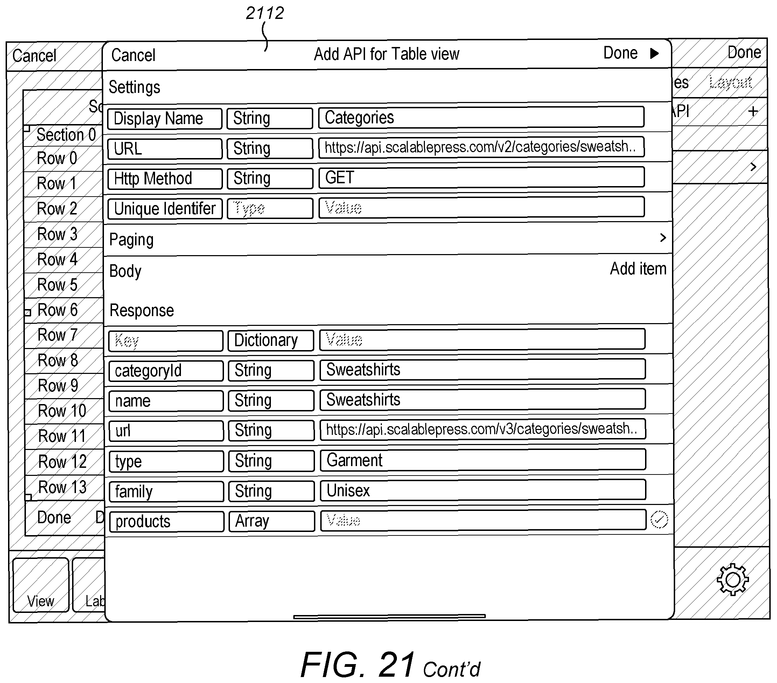

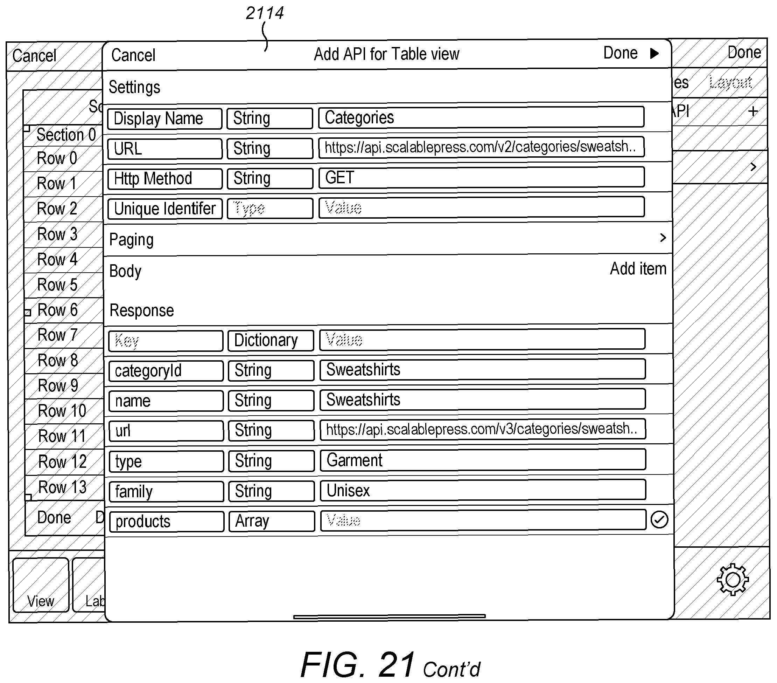

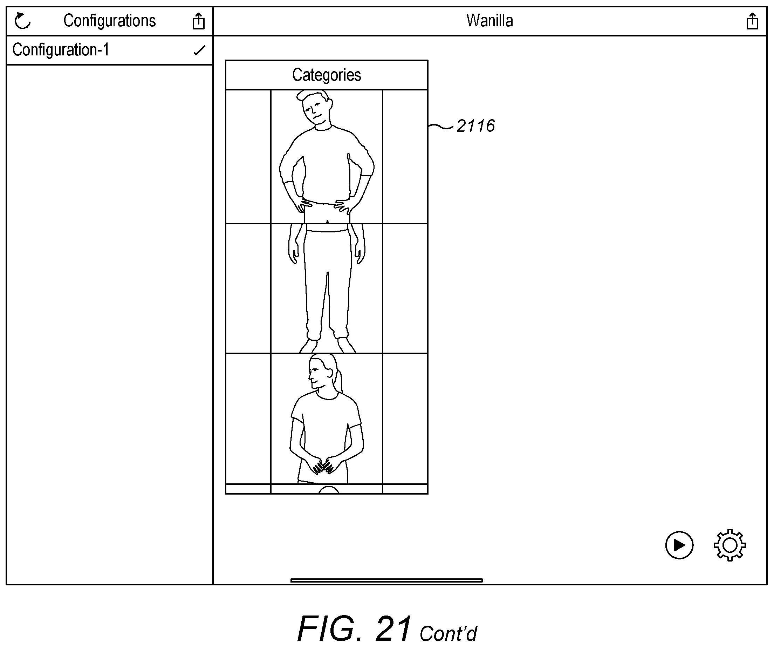

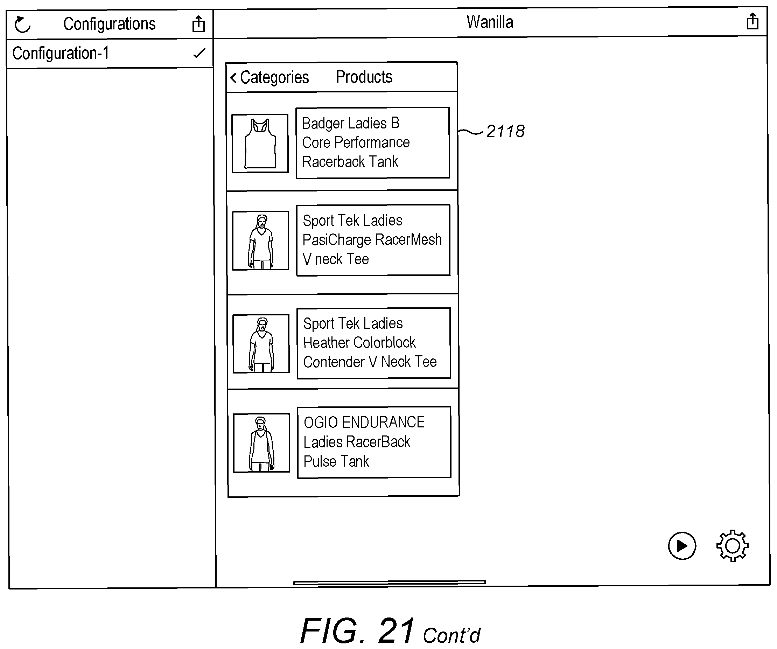

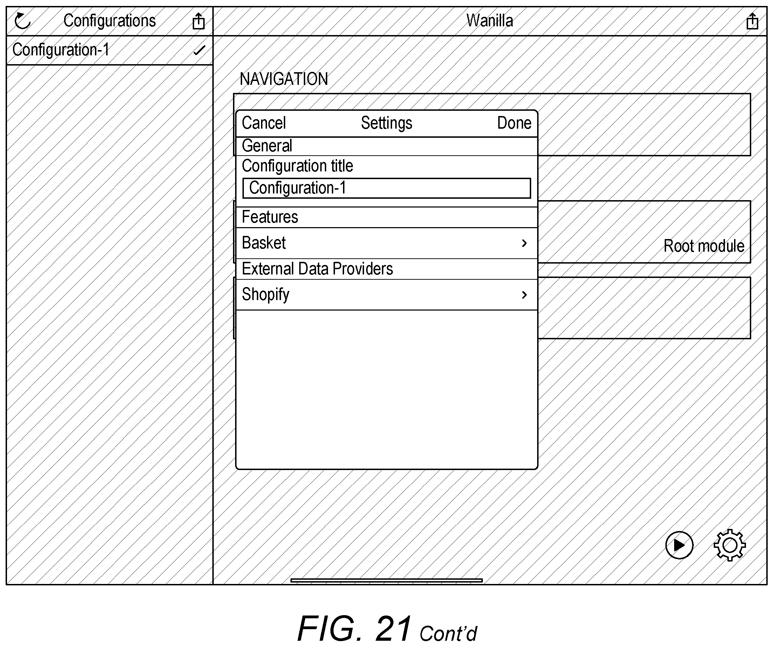

The creator can then proceed to add, at Step 2102, a second screen, as shown in Figure 21. As per Steps 1810 to 1818 as applied to the first screen, the creator creates, at Step 2104, a list UI element and applies appropriate layout constraints to the list UI element. The creator then adds, at Step 2106, a secondary API with a URL component.

Next, the creator selects, at Step 2108, the origin API model for the secondary API having the URL component, and subsequently selects, at Step 2110, the API item from the origin API model for the secondary API having the URL component. Once the API item has been selected, the creator executes, at Step 2112, the secondary API. The creator then selects, at Step 2114, the API item for the list UI element from the secondary API response. A preview of the Configuration is then shown (Step 2116) and a second screen is shown (Step 2118) with data after selecting an item in the root screen. Configuration settings can then be viewed and amended accordingly.

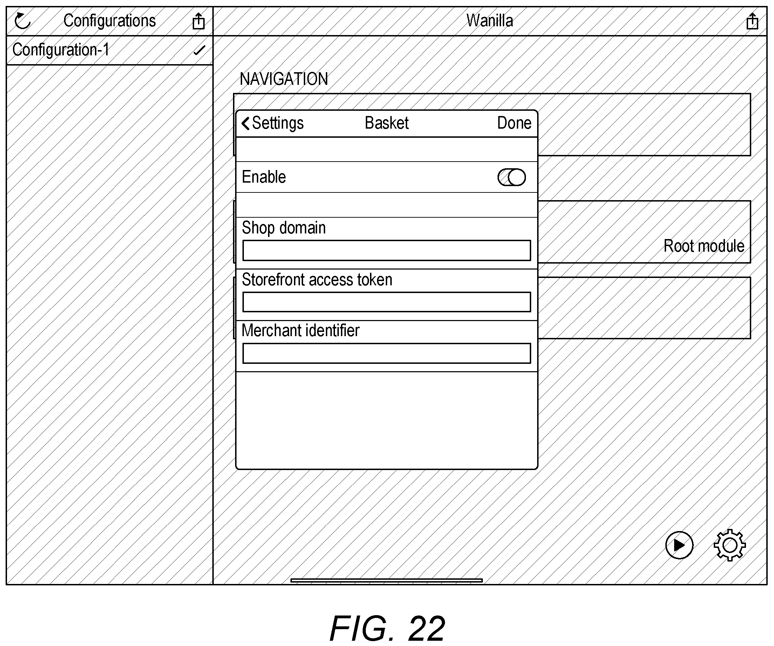

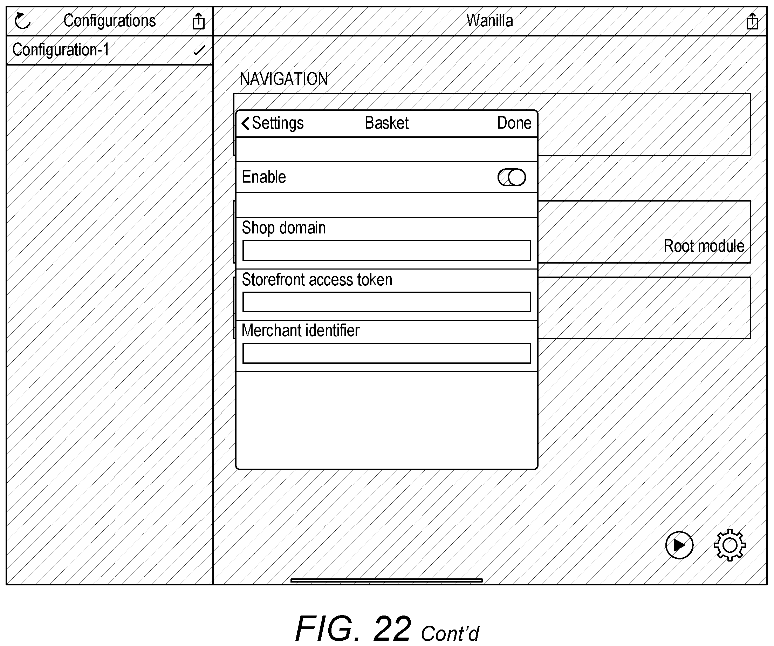

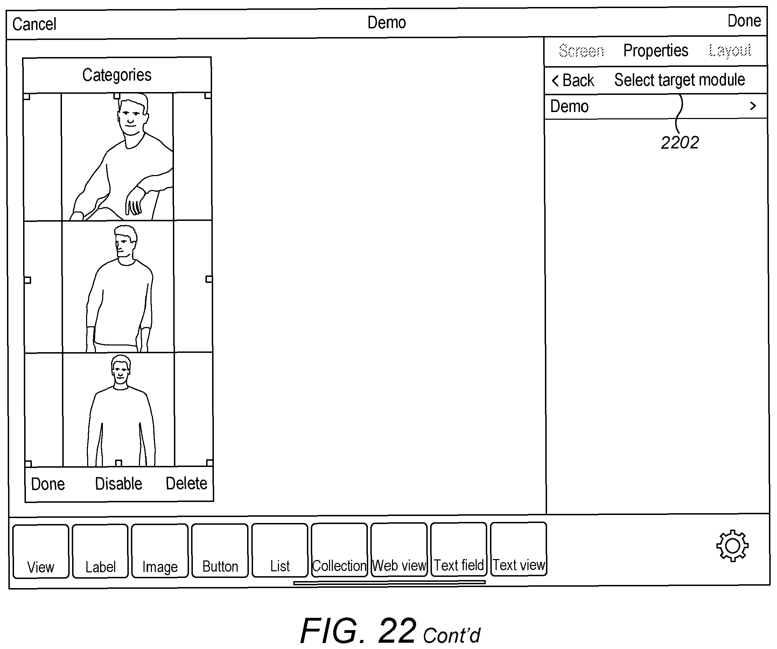

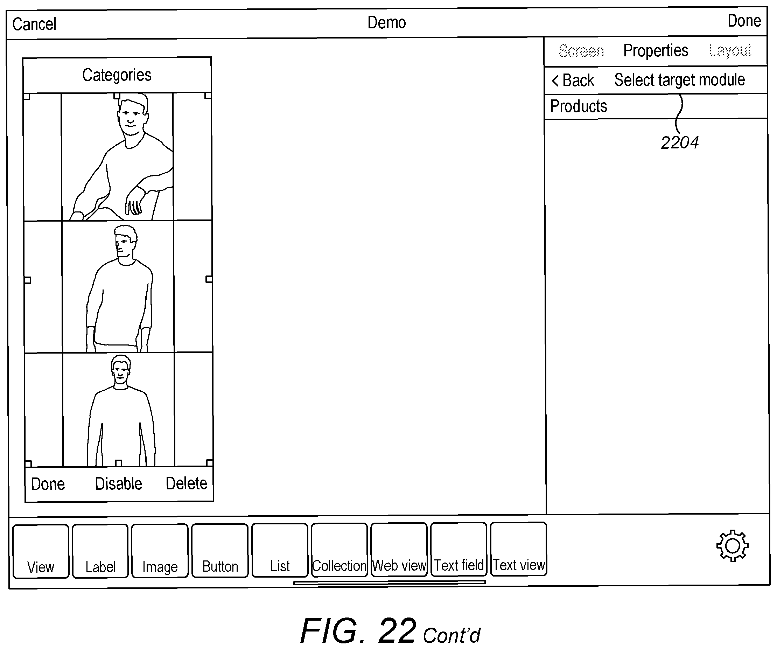

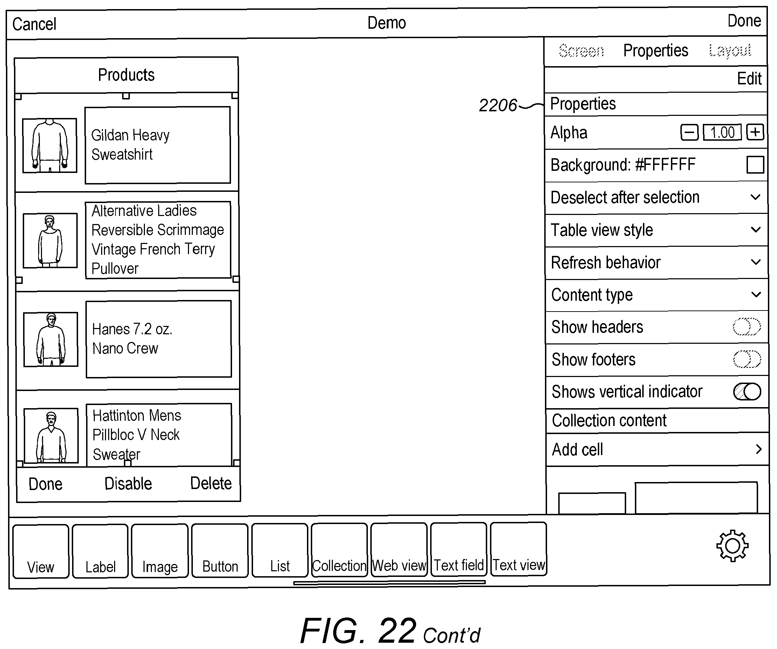

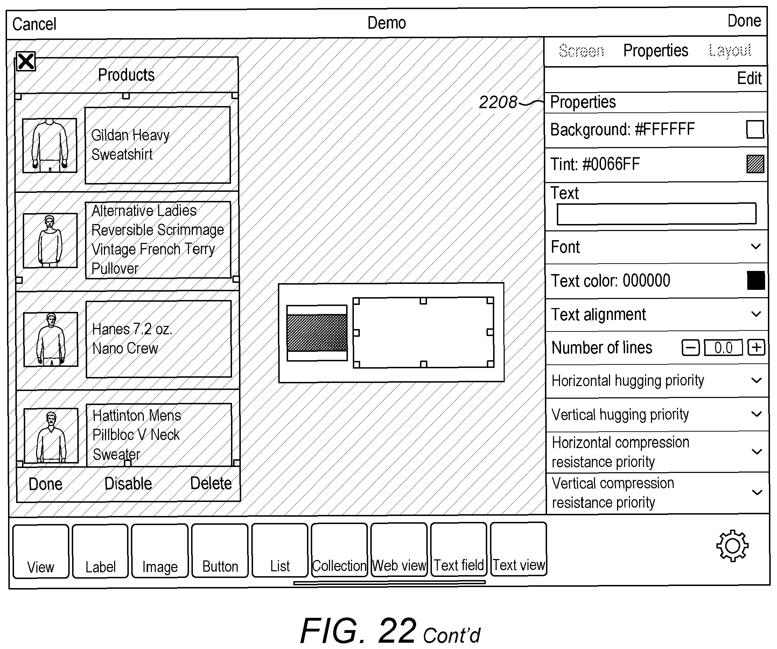

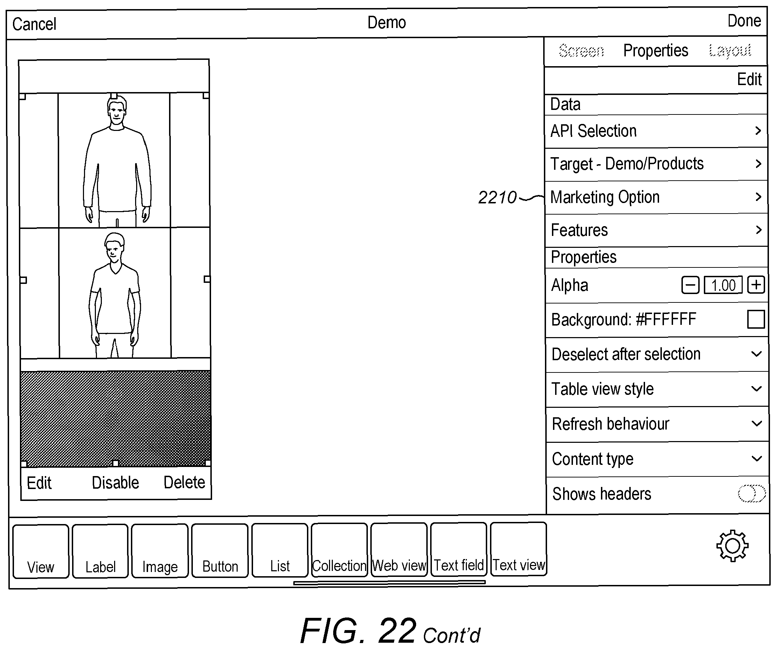

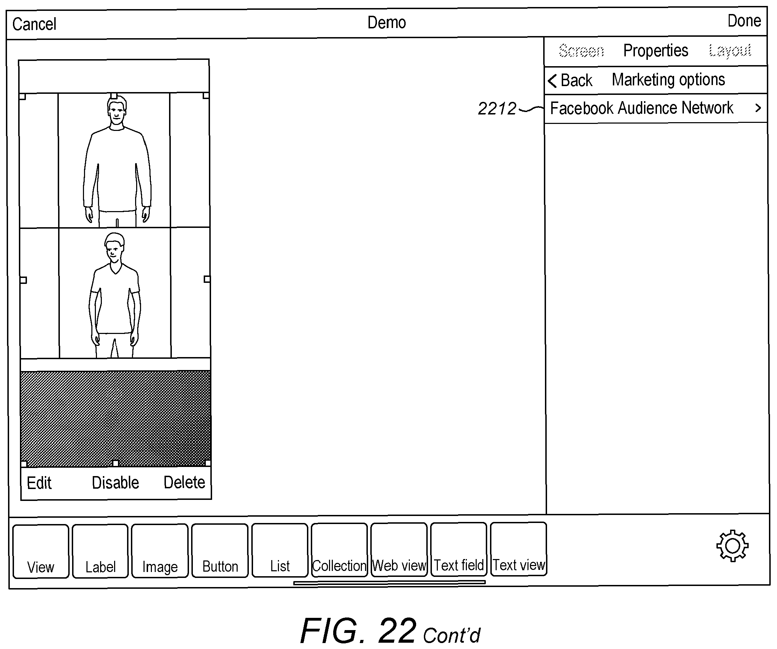

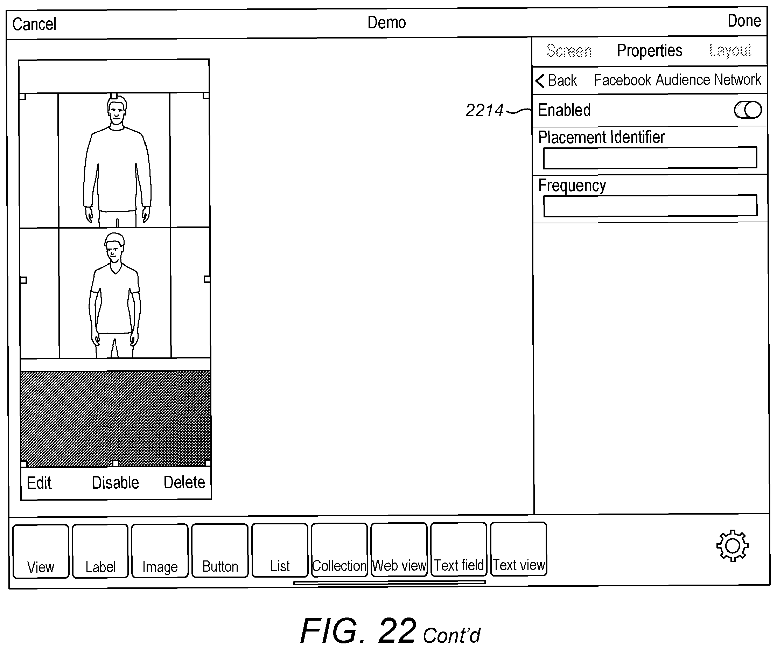

The creator then selects, at Step 2202, a target module for the UI element, and subsequently selects, at Step 2204, a target screen for the UI element, as shown in Figure 22. The creator edits, at Steps 2206 and 2208, the UI element properties. Lastly, the creator selects, at Steps 2210 and 2212, the desired marketing option, e.g. Facebook Audience Network, where the selected marketing option can be configured at Step 2214.

In a further embodiment of the present invention, it is possible to make the interface with the creator even simpler to use. Rather than the creator physically interacting with the creator app 14 to manually place UI elements on a canvas and define child/parent relationships between UI elements, it is possible for the creator to hand draw a structural diagram of the UI elements and their relationships in a similar manner to that shown in Figure 7 and then to use a mechanism which uses machine learning to identify the images and use then to construct the data structure of the UI. The mechanism would typically be an application on the creator device 2 which captures images of hand drawn diagrams and then uses a vision shape algorithm to determine the UI elements hierarchy. Once this structure had been determined, the Data Layer of the Configuration 12 could be created by use of a parser which would create the parent/child relationships from the relationships determined by the vision shape algorithm. The specific data which is to be fetched for each UI element would still need to be specified, as would the appearance and position of each UI element, but complicated Uls which have multiple hierarchical layers child UI elements could therefore be created much more easily.

In a further embodiment, the creator application has an additional testing functionality. This embodiment provides a mechanism to test possible user experience (UX) flows in an application. As such the mechanism proceeds to check all possible user interaction pathways using the UI and then reports back on any problems encountered for the user. It can also provide feedback on how much time an effort it took the user to achieve a certain task such as a 'checkout' from a website (number of clicks required and time it takes to achieve task). The results of such testing enable the creator to get feedback and have testers/collaborators perform tasks that will identify problems in the UX/UI that has been created and added as designs into the system. This enables the creator to identify which UI flows are problematic or not, and which Uls are more suited for the type of the application that they are creating

In a further embodiment, it is possible to have a different input into the system. Rather than a UI being created by the creator app 14, it is possible to use other logical element construction programs operating in a different coding language (such as for example Sketch, AdobeXD, Figma, Zeplin) that specify relationships between UI elements, their appearance and their positioning. Such may have already created Uls which it would be useful to import into the embodiment of the present invention such that they no longer need multiple copies of updates to be created for download using conventional techniques. Accordingly, in this embodiment a convertor (translator) is provided to convert the code in the existing UI creation applications language into code which is understood by the creator app and so can be used to generate the configuration 12. For any existing UI creation application that displays/describes/edits a User Interface, its output can be converted (translated) into the a Wanilla User interface model and then be used in the manner which has been described in earlier embodiments to enable the UI to be implemented on different user devices 7, 8, 9.

## Claims

1. A method of creating a configuration file (12) for use in generating a page of a computer-generated user interface (UI) (16), the configuration file (12) representing a data model and describing a plurality of UI elements of the UI and their appearance within the page of the UI, the configuration file (12) comprising a UI Layer (100) for specifying the plurality of UI elements which each comprise Screens (104) and View Instructions (106) which define the appearance and functionality of each of the UI elements to be configured and displayed and a Data Layer (200) for specifying, for each of the plurality of UI elements, a respective remote location of data to be obtained to populate the UI element, each Screen (104) comprising a model representation of all of the elements that are required for an accurate display of the UI on the page and the Data Layer (200) comprising a plurality of data retrieving models; the method comprising:
Selecting (302) a UI element from a plurality of icons of UI elements displayed on a graphical user interface;
Positioning (302) the selected UI element on a canvass that represents the page;
Configuring the appearance of the selected UI element on the canvass;
Updating (306) a configuration file (12) based on the position and configuration of the selected UI element on the canvass;
Defining data (304) to populate the selected UI element by specifying a remote communications address where the data is to be fetched from;
Updating (308) a data retrieving model of the plurality of data models in the Data Layer (200) with the remote communications address where the data is to be retrieved from; and
Linking together (314) the data retrieving model and the selected UI element such that, in use, data obtained via the data retrieving model can be used to populate the selected UI element linked to that data retrieving model in the Data Layer (200) when generating the UI (16).

2. The method of Claim 1, wherein
the selecting step (302) comprises selecting the UI element from the UI Layer (100) which comprises: a screen (104) which provides a model representation of a plurality of UI elements that make up the UI (16) to be displayed in a page of the UI; the screen (104) comprising: a plurality of View Instructions (106) associated with the screen (104) which define the plurality of UI elements and how the each of the plurality of UI elements is to be configured and displayed within the screen (104); and
the linking step (314) comprises linking each View Instruction (106) of the plurality of View Instructions (106) to the data retrieving model such that, in use, data retrieved by the data retrieving model can be used to populate the associated View Instruction (106).

3. The method of Claim 2, wherein at least one of plurality of View Instructions (106) comprises an UI element that is configured to generate a response to user interaction with the UI element.

4. The method of Claim 2 or 3, wherein each View Instruction (106) includes a common UI element type taken from the group comprising a label, a button, a list, a text field, an image, a web-content container, a switch and a slider.

5. The method of any of Claims 2 to 4, wherein the selecting step comprises selecting the UI element having a View Instruction (106) that includes a Target Screen Identifier, which defines an optional Screen (104) which can be navigated to when user interaction triggers navigation to that Screen (104).

6. The method of any of Claims 2 to 5, wherein each of the plurality of View Instructions (106) has an associated Layout Model (108) which specifies the positioning of the UI element within the Screen (104).

7. The method of any of Claim 2 to 6, wherein the selecting step comprises selecting the UI element where each View Instruction (106) of the UI element has an associated list of Child View Instructions which define the plurality of Child UI elements and how the plurality of Child UI elements is to be configured and displayed within the Screen (104), wherein each Child UI element has a Parent UI element at a higher hierarchical position and is defined within a coordinate boundary of the Parent UI element representation of the View Instruction (106).

8. The method of any of Claims 1 to 7, wherein the defining step comprises defining the data retrieving model to comprise an Application Program Interface (API) Model (202) defining a Hyper Text Transfer Protocol (HTTP) Request/Response and the API Model (202) specifies a Uniform Resource Locator (URL) Model (214) and comprises an API Item (204) for storing a response to the HTTP request, the API item (24) specifying a type of retrieved data structure into which the retrieved data will be mapped, a value property (210) which specifies the type of retrieved data, such as a list or hash table, and a key field (212) which specifies a data path to the specific API Item (204) within the retrieved data structure.

9. The method of any of Claims 1 to 8, the selecting step comprises selecting the UI element where having a screen (104) which comprises a plurality of screens (104) which each provide a model representation of a plurality of UI elements that make up the UI (16) to be displayed in a page of the UI (16); and the plurality of screens (104) form a module (102) which groups together the screens (104) to form the UI (16).

10. A computer-implemented system adapted to create a configuration file (12) for use in generating a page of a computer-generated user interface (UI) (16), the configuration file (12) representing a data model and describing a plurality of UI elements of the UI (16) and their appearance within the page of the UI (16), the configuration file (12) comprising a UI Layer (100) for specifying the plurality of UI elements which comprise Screens (104) and View Instructions (106) which define the appearance and functionality of each of the UI elements to be configured and displayed and a Data Layer (200) for specifying, for each of the plurality of UI elements, a respective remote location of data to be obtained to populate the UI elements; each Screen (104) comprising a model representation of all of the elements that are required for an accurate display of the UI on the page and the Data Layer (200) comprising a plurality of data retrieving models, the system comprising:
a selection tool configured to enable selection (302) of a UI element from a plurality of icons of UI elements displayed on a graphical user interface;
a positioning tool configured to enable positioning (302) of the selected UI element on a canvass that represents the page;
a configuring tool for enabling a creator to configure the appearance of the selected UI element on the canvass;
a processor for updating (306) a configuration file (12) based on the position and configuration of the selected UI element on the canvass;
a defining tool configured to enable defining (304) of data to populate the selected UI element by specifying a remote communications address where the data is to be fetched from;
the processor being configured to update (308) the data retrieving model of the plurality of data models in the Data Layer (200) with the remote communications address where data is to be retrieved from and to link together (314) the data retrieving model and the selected UI element such that, in use, data obtained via the data retrieving model can be used to populate the selected UI element linked to that data retrieving model in the Data Layer (200) when generating the UI (16).

11. A computer-implemented generator application (18a, 18b, 18c) for creating a computer-generated user interface (UI) (16), the generator application being installed on a user device (7, 8, 9), being compatible with a specific operating system of the user device (7, 8, 9), and being configured to work with the operating system; wherein the generator application (18a, 18b, 18c) is configured to:
fetch a configuration file (12) from a remote configuration server (3), the configuration file (12) describing a plurality of UI elements of the UI (16) and their appearance within the page of the UI, the configuration file (12) comprising a UI Layer (100) defining a plurality of UI elements which each comprise Screens (104) and View Instructions (106) which define the appearance and functionality of each of the UI elements to be configured and displayed and a Data Layer (200) defining a plurality of data retrieving models for obtaining data required to populate the UI elements from remote communications addresses; wherein each data retrieving model is associated with a corresponding UI element and each Screen (104) comprises a model representation of all of the elements that are required for an accurate display of the UI on the page;
use the configuration file (12) to generate a UI layout based on the definitions of UI elements provided in the UI Layer (100),
use the data retrieving models of the Data Layer (200) to fetch data associated with each UI elements specified in the UI Layer (100) of the configuration file (12) from one or more remote servers;
provide the fetched data to corresponding UI elements to which the data retrieving models are associated to create the UI (16).

12. The generator application of Claim 11, further configured to create a hash of the configuration file (12) and to send the hash to the remote configuration server (3), wherein the hash can be used by the remote configuration server (3) to determine the current version of the configuration file (12) being used on the generator application (18a, 18b, 18c) such that the remote configuration server (3) can determine whether an updated version of the configuration file (12) is required by the generator application (18a, 18b, 18c).

13. The generator application (18a, 18b, 18c) of Claims 11 or 12, further configured to:
cache each received response of a previously executed data retrieving model;
search the cached received responses for a response from a previously executed data retrieving model which matches a currently data retrieving model; and
use the cashed response if a response from a matched previously executed data retrieving model is found.

14. A method of creating a computer-generated user interface (UI) (16), the method comprising:
installing (402) a computer-implemented generator application (18a, 18b, 18c) on a user device (7, 8, 9), the generator application (18a, 18b, 18c) being compatible with a specific operating system of the user device (7, 8, 9) and being configured to work with the operating system of that device (7, 8, 9);
operating the computer-implemented generator application (18a, 18b, 18c) to:
fetch (404) a configuration file (12) from a remote configuration server (3), the configuration file (12) describing a plurality of UI elements of the UI (16) and their appearance within the page of the UI, the configuration file (12) comprising a UI Layer (100) defining a plurality of UI elements which each comprise Screens (104) and View Instructions (106) which define the appearance and functionality of each of the UI elements to be configured and displayed and a Data Layer (200) defining a plurality of data retrieving models for obtaining data required to populate the UI elements from remote communications addresses; wherein each data retrieving model is associated with a corresponding UI element and each Screen (104) comprises a model representation of all of the elements that are required for an accurate display of the UI on the page;
generate (406) a UI layout based on the definitions of UI elements provided in the UI Layer (100) of the configuration file (12),
use the Data Layer (200) to fetch (408) data associated with each UI elements specified in the UI Layer (100) of the configuration file (12) from one or more remote servers;
provide (410) the fetched data to corresponding UI elements to which the data retrieving models are associated; and
display the UI elements and the fetched data as the UI (16).

15. A computer program product comprising instructions which, when the program is executed by a computer, cause the computer to carry out the method of Claim 1 or Claim 14.

## Patentansprüche

1. Verfahren zum Erstellen einer Konfigurationsdatei (12) zur Verwendung beim Erzeugen einer Seite einer computergenerierten Benutzeroberfläche (User Interface, UI) (16), wobei die Konfigurationsdatei (12) ein Datenmodell darstellt und eine Vielzahl an UI-Elementen der UI und deren Erscheinungsbild innerhalb der Seite der UI beschreibt, wobei die Konfigurationsdatei (12) eine UI-Ebene (100) zum Angeben der Vielzahl an UI-Elementen umfasst, die jeweils Bildschirme (104) und Anzeigeanweisungen (106) umfassen, die das Erscheinungsbild und die Funktionalität jedes der zu konfigurierenden und anzuzeigenden UI-Elemente definieren, und eine Datenebene (200) zum Angeben, für jedes der Vielzahl an UI-Elementen, eines jeweiligen Remotespeicherorts von Daten, die zum Auffüllen des UI-Elements abzurufen sind, wobei jeder Bildschirm (104) eine Modelldarstellung aller Elemente umfasst, die für eine korrekte Anzeige der UI auf der Seite erforderlich sind, und wobei die Datenebene (200) eine Vielzahl an Datenabrufmodellen umfasst, wobei das Verfahren umfasst:
Auswählen (302) eines UI-Elements aus einer Vielzahl an Symbolen von UI-Elementen, die auf einer grafischen Benutzeroberfläche angezeigt werden;
Positionieren (302) des ausgewählten UI-Elements auf einer Arbeitsfläche, die die Seite darstellt;
Konfigurieren des Erscheinungsbilds des ausgewählten UI-Elements auf der Arbeitsfläche;
Aktualisieren (306) einer Konfigurationsdatei (12) auf Basis der Position und Konfiguration des ausgewählten UI-Elements auf der Arbeitsfläche;
Definieren von Daten (304), mit denen das ausgewählte UI-Element aufzufüllen ist, indem eine Remotekommunikationsadresse angegeben wird, aus der die Daten abzurufen sind;
Aktualisieren (308) eines Datenabrufmodells aus der Vielzahl an Datenmodellen in der Datenebene (200) mit der Remotekommunikationsadresse, aus der die Daten abzurufen sind; und
Verknüpfen (314) des Datenabrufmodells mit dem ausgewählten UI-Element, sodass, bei Verwendung, über das Datenabrufmodell abgerufene Daten zum Auffüllen des ausgewählten UI-Elements verwendet werden können, das mit diesem Datenabrufmodell in der Datenebene (200) verknüpft ist, wenn die UI (16) erzeugt wird.

2. Verfahren nach Anspruch 1, wobei
der Auswahlschritt (302) umfasst, dass das UI-Element aus der UI-Ebene (100) ausgewählt wird, die umfasst: einen Bildschirm (104), der eine Modelldarstellung einer Vielzahl an auf einer Seite der UI anzuzeigenden UI-Elementen bereitstellt, aus denen sich die UI (16) zusammensetzt; wobei der Bildschirm (104) umfasst: eine Vielzahl an dem Bildschirm (104) zugeordneten Anzeigeanweisungen (106), die die Vielzahl an UI-Elementen und die Art und Weise definieren, wie jedes der Vielzahl an UI-Elementen zu konfigurieren und innerhalb des Bildschirms (104) anzuzeigen ist; und
der Verknüpfungsschritt (314) umfasst, dass jede Anzeigeanweisung (106) aus der Vielzahl an Anzeigeanweisungen (106) mit dem Datenabrufmodell verknüpft wird, sodass, bei Verwendung, über das Datenabrufmodell abgerufene Daten zum Auffüllen der zugehörigen Anzeigeanweisung (106) verwendet werden können.

3. Verfahren nach Anspruch 2, wobei zumindest eine aus der Vielzahl an Anzeigeanweisungen (106) ein UI-Element umfasst, das zum Erzeugen einer Antwort auf eine Benutzerinteraktion mit dem UI-Element konfiguriert ist.

4. Verfahren nach Anspruch 2 oder 3, wobei jede Anzeigeanweisung (106) einen allgemeinen UI-Elementtyp aus der Gruppe umfassend eine Kennzeichnung, eine Schaltfläche, eine Liste, ein Textfeld, ein Bild, einen Webinhaltscontainer, einen Schalter und einen Schieberegler beinhaltet.

5. Verfahren nach einem der Ansprüche 2 bis 4, wobei der Auswahlschritt umfasst, dass das UI-Element beinhaltend eine Anzeigeanweisung (106) ausgewählt wird, die eine Zielbildschirmkennung beinhaltet, die einen optionalen Bildschirm (104) definiert, zu dem navigiert werden kann, wenn eine Benutzerinteraktion die Navigation zu diesem Bildschirm (104) auslöst.

6. Verfahren nach einem der Ansprüche 2 bis 5, wobei jede der Vielzahl an Anzeigeanweisungen (106) ein zugeordnetes Layoutmodell (108) aufweist, das die Positionierung des UI-Elements innerhalb des Bildschirms (104) angibt.

7. Verfahren nach einem der Ansprüche 2 bis 6, wobei der Auswahlschritt umfasst, dass das UI-Element ausgewählt wird, wobei jede Anzeigeanweisung (106) des UI-Elements eine zugehörige Liste an untergeordneten Anzeigeanweisungen aufweist, die die Vielzahl an untergeordneten UI-Elementen und die Art und Weise definieren, wie die Vielzahl an untergeordneten UI-Elementen zu konfigurieren und innerhalb des Bildschirms (104) anzuzeigen ist, wobei jedes untergeordnete UI-Element ein übergeordnetes UI-Element an einer höheren hierarchischen Position aufweist und innerhalb einer Koordinatengrenze für die Darstellung des übergeordneten UI-Elements der Anzeigeanweisung (106) definiert wird.

8. Verfahren nach einem der Ansprüche 1 bis 7, wobei der Definitionsschritt umfasst, dass definiert wird, dass das Datenabrufmodell ein Anwendungsprogrammschnittstellenmodell (Application Program Interface, API-Modell) (202) umfassen soll, das eine Hypertextübertragungsprotokollanfrage/- antwort (Hyper Text Transfer Protocol, HTTP-Anfrage/-Antwort) definiert, und wobei das API-Modell (202) ein URL-Modell (Uniform Resource Locator) (214) angibt und ein API-Element (204) zum Speichern einer Antwort auf die HTTP-Anfrage umfasst, wobei das API-Element (24) einen Typ einer abgerufenen Datenstruktur angibt, der die abgerufenen Daten zugeordnet werden, eine Werteigenschaft (210), die den Typ der abgerufenen Daten angibt, z. B. eine Liste oder Hashtabelle, und ein Schlüsselfeld (212), das einen Datenpfad zu dem spezifischen API-Element (204) innerhalb der abgerufenen Datenstruktur angibt.

9. Verfahren nach einem der Ansprüche 1 bis 8, wobei der Auswahlschritt umfasst, dass das UI-Element beinhaltend einen Bildschirm (104) ausgewählt wird, der eine Vielzahl an Bildschirmen (104) umfasst, die jeweils eine Modelldarstellung einer Vielzahl an auf einer Seite der UI (16) anzuzeigenden UI-Elementen bereitstellen, aus denen sich die UI (16) zusammensetzt; und wobei die Vielzahl an Bildschirmen (104) ein Modul (102) bilden, das die Bildschirme (104) gruppiert, um die UI (16) zu bilden.

10. Computergeneriertes System, eingerichtet zum Erstellen einer Konfigurationsdatei (12) zur Verwendung beim Erzeugen einer Seite einer computergenerierten Benutzeroberfläche (User Interface, UI) (16), wobei die Konfigurationsdatei (12) ein Datenmodell darstellt und eine Vielzahl an UI-Elementen der UI (16) und deren Erscheinungsbild innerhalb der Seite der UI (16) beschreibt, wobei die Konfigurationsdatei (12) eine UI-Ebene (100) zum Angeben der Vielzahl an UI-Elementen umfasst, die Bildschirme (104) und Anzeigeanweisungen (106) umfassen, die das Erscheinungsbild und die Funktionalität jedes der zu konfigurierenden und anzuzeigenden UI-Elemente definieren, und eine Datenebene (200) zum Angeben, für jedes der Vielzahl an UI-Elementen, eines jeweiligen Remotespeicherorts von Daten, die zum Auffüllen der UI-Elemente abzurufen sind; wobei jeder Bildschirm (104) eine Modelldarstellung aller Elemente umfasst, die für eine korrekte Anzeige der UI auf der Seite erforderlich sind, und wobei die Datenebene (200) eine Vielzahl an Datenabrufmodellen umfasst, wobei das System umfasst:
ein Auswahlwerkzeug, konfiguriert zum Ermöglichen der Auswahl (302) eines UI-Elements aus einer Vielzahl an Symbolen von UI-Elementen, die auf einer grafischen Benutzeroberfläche angezeigt werden;
ein Positionierwerkzeug, konfiguriert zum Ermöglichen der Positionierung (302) des ausgewählten UI-Elements auf einer Arbeitsfläche, die die Seite darstellt;
ein Konfigurierwerkzeug zum Ermöglichen, dass ein Ersteller das Erscheinungsbild des ausgewählten UI-Elements auf der Arbeitsfläche konfiguriert;
eine Verarbeitungseinheit zum Aktualisieren (306) einer Konfigurationsdatei (12) auf Basis der Position und Konfiguration des ausgewählten UI-Elements auf der Arbeitsfläche;
ein Definierwerkzeug, konfiguriert zum Ermöglichen der Definition (304) von Daten, mit denen das ausgewählte UI-Element aufzufüllen ist, indem eine Remotekommunikationsadresse angegeben wird, aus der die Daten abzurufen sind;
wobei die Verarbeitungseinheit konfiguriert ist, um das Datenabrufmodell aus der Vielzahl an Datenmodellen in der Datenebene (200) mit der Remotekommunikationsadresse zu aktualisieren (308), aus der Daten abzurufen sind, und um das Datenabrufmodell und das ausgewählte UI-Element zu verknüpfen (314), sodass, bei Verwendung, über das Datenabrufmodell abgerufene Daten zum Auffüllen des ausgewählten UI-Elements verwendet werden können, das mit diesem Datenabrufmodell in der Datenebene (200) verknüpft ist, wenn die UI (16) erzeugt wird.

11. Computerimplementierte Generatoranwendung (18a, 18b, 18c) zum Erstellen einer computergenerierten Benutzeroberfläche (User Interface, UI) (16), wobei die Generatoranwendung auf einer Benutzervorrichtung (7, 8, 9) installiert wird, mit einem spezifischen Betriebssystem der Benutzervorrichtung (7, 8, 9) kompatibel ist und für den Betrieb mit dem Betriebssystem konfiguriert ist; wobei die Generatoranwendung (18a, 18b, 18c) konfiguriert ist zum:
Abrufen einer Konfigurationsdatei (12) aus einem Remotekonfigurationsserver (3), wobei die Konfigurationsdatei (12) eine Vielzahl an UI-Elementen der UI (16) und deren Erscheinungsbild innerhalb der Seite der UI beschreibt, wobei die Konfigurationsdatei (12) eine UI-Ebene (100) umfasst, die eine Vielzahl an UI-Elementen definiert, die jeweils Bildschirme (104) und Anzeigeanweisungen (106) umfassen, die das Erscheinungsbild und die Funktionalität jedes der zu konfigurierenden und anzuzeigenden UI-Elemente definieren, und eine Datenebene (200), die eine Vielzahl an Datenabrufmodellen zum Abrufen von Daten, die zum Auffüllen der UI-Elemente erforderlich sind, aus Remotekommunikationsadressen definiert; wobei jedes Datenabrufmodell einem entsprechenden UI-Element zugeordnet ist und jeder Bildschirm (104) eine Modelldarstellung aller Elemente umfasst, die für eine korrekte Anzeige der UI auf der Seite erforderlich sind;
Verwenden der Konfigurationsdatei (12) zum Erzeugen eines UI-Layouts auf Basis der Definitionen von UI-Elementen, die in der UI-Ebene (100) bereitgestellt werden,
Verwenden der Datenabrufmodelle der Datenebene (200) zum Abrufen von Daten, die den jeweiligen in der UI-Ebene (100) der Konfigurationsdatei (12) angegebenen UI-Elementen zugeordnet sind, aus einem oder mehreren Remoteservern;
Bereitstellen der abgerufenen Daten für entsprechende UI-Elemente, denen die Datenabrufmodelle zugeordnet sind, um die UI (16) zu erstellen.

12. Generatoranwendung nach Anspruch 11, ferner konfiguriert zum Erstellen eines Hashs der Konfigurationsdatei (12) und zum Senden des Hashs an den Remotekonfigurationsserver (3), wobei der Hash von dem Remotekonfigurationsserver (3) verwendet werden kann, um die aktuelle Version der Konfigurationsdatei (12) zu bestimmen, die auf der Generatoranwendung (18a, 18b, 18c) verwendet wird, derart, dass der Remotekonfigurationsserver (3) bestimmen kann, ob die Generatoranwendung (18a, 18b, 18c) eine aktualisierte Version der Konfigurationsdatei (12) erfordert.

13. Generatoranwendung (18a, 18b, 18c) nach den Ansprüchen 11 oder 12, ferner konfiguriert zum:
Zwischenspeichern jeder empfangenen Antwort eines zuvor ausgeführten Datenabrufmodells;
Durchsuchen der zwischengespeicherten empfangenen Antworten nach einer Antwort von einem zuvor ausgeführten Datenabrufmodell, das einem aktuellen Datenabrufmodell entspricht; und
Verwenden der zwischengespeicherten Antwort, wenn eine Antwort von einem übereinstimmenden zuvor ausgeführten Datenmodell gefunden wird.

14. Verfahren zum Erstellen einer computergenerierten Benutzeroberfläche (User Interface, UI) (16), wobei das Verfahren umfasst:
Installieren (402) einer computerimplementierten Generatoranwendung (18a, 18b, 18c) auf einer Benutzervorrichtung (7, 8, 9), wobei die Generatoranwendung (18a, 18b, 18c) mit einem spezifischen Betriebssystem der Benutzervorrichtung (7, 8, 9) kompatibel ist und für den Betrieb mit dem Betriebssystem dieser Vorrichtung (7, 8, 9) konfiguriert ist;
Betreiben der computerimplementierten Generatoranwendung (18a, 18b, 18c) zum:
Abrufen (404) einer Konfigurationsdatei (12) aus einem Remotekonfigurationsserver (3), wobei die Konfigurationsdatei (12) eine Vielzahl an UI-Elementen der UI (16) und deren Erscheinungsbild innerhalb der Seite der UI beschreibt, wobei die Konfigurationsdatei (12) eine UI-Ebene (100) umfasst, die eine Vielzahl an UI-Elementen definiert, die jeweils Bildschirme (104) und Anzeigeanweisungen (106) umfassen, die das Erscheinungsbild und die Funktionalität jedes der zu konfigurierenden und anzuzeigenden UI-Elemente definieren, und eine Datenebene (200), die eine Vielzahl an Datenabrufmodellen zum Abrufen von Daten, die zum Auffüllen der UI-Elemente erforderlich sind, aus Remotekommunikationsadressen definiert; wobei jedes Datenabrufmodell einem entsprechenden UI-Element zugeordnet ist und jeder Bildschirm (104) eine Modelldarstellung aller Elemente umfasst, die für eine korrekte Anzeige der UI auf der Seite erforderlich sind;
Erzeugen (406) eines UI-Layouts auf Basis der Definitionen von UI-Elementen, die in der UI-Ebene (100) der Konfigurationsdatei (12) bereitgestellt werden,
Verwenden der Datenebene (200) zum Abrufen (408) von Daten, die den jeweiligen in der UI-Ebene (100) der Konfigurationsdatei (12) angegebenen UI-Elementen zugeordnet sind, aus einem oder mehreren Remoteservern;
Bereitstellen (410) der abgerufenen Daten für entsprechende UI-Elemente, denen die Datenabrufmodelle zugeordnet sind; und
Anzeigen der UI-Elemente und der abgerufenen Daten als UI (16).

15. Computerprogrammprodukt umfassend Anweisungen, die bei Ausführung des Programms durch einen Computer veranlassen, dass der Computer das Verfahren nach Anspruch 1 oder Anspruch 14 ausführt.

## Revendications

1. Procédé de création d'un fichier de configuration (12) pour une utilisation dans la génération d'une page d'une interface utilisateur (UI) (16) générée par ordinateur, le fichier de configuration (12) représentant un modèle de données et décrivant une pluralité d'éléments d'UI de l'UI et leur aspect au sein de la page de l'UI, le fichier de configuration (12) comprenant une couche d'UI (100) destinée à spécifier la pluralité d'éléments d'UI qui comprennent chacun des écrans (104) et des instructions de visualisation (106) qui définissent l'aspect et la fonctionnalité de chacun des éléments d'UI à configurer et afficher et une couche de données (200) destinée à spécifier, pour chacun de la pluralité d'éléments d'UI, un emplacement distant respectif de données à obtenir pour peupler l'élément d'UI, chaque écran (104) comprenant une représentation de modèle de l'ensemble des éléments qui sont requis pour un affichage précis de l'UI sur la page et la couche de données (200) comprenant une pluralité de modèles de récupération de données ; le procédé comprenant :
la sélection (302) d'un élément d'UI parmi une pluralité d'icônes d'éléments d'UI affichées sur une interface utilisateur graphique ;
le positionnement (302) de l'élément d'UI sélectionné sur un canevas qui représente la page ;
la configuration de l'aspect de l'élément d'UI sélectionné sur le canevas ;
la mise à jour (306) d'un fichier de configuration (12) sur la base de la position et de la configuration de l'élément d'UI sélectionné sur le canevas ;
la définition de données (304) pour peupler l'élément d'UI sélectionné par spécification d'une adresse de communications distante auprès de laquelle des données doivent être extraites ;
la mise à jour (308) d'un modèle de récupération de données de la pluralité de modèles de données dans la couche de données (200) avec l'adresse de communications distante auprès de laquelle les données doivent être récupérées ; et
la liaison ensemble (314) du modèle de récupération de données et de l'élément d'UI sélectionné de telle sorte que, pendant l'utilisation, des données obtenues par l'intermédiaire du modèle de récupération de données peuvent être utilisées pour peupler l'élément d'UI sélectionné lié à ce modèle de récupération de données dans la couche de données (200) lors de la génération de l'UI (16).

2. Procédé selon la revendication 1, dans lequel
l'étape de sélection (302) comprend la sélection de l'élément d'UI à partir de la couche d'UI (100) qui comprend : un écran (104) qui fournit une représentation de modèle d'une pluralité d'éléments d'UI qui composent l'UI (16) à afficher dans une page de l'UI ; l'écran (104) comprenant : une pluralité d'instructions de visualisation (106) associées à l'écran (104) qui définissent la pluralité d'éléments d'UI et la façon dont chacun de la pluralité d'éléments d'UI doit être configuré et affiché au sein de l'écran (104) ; et
l'étape de liaison (314) comprend la liaison de chaque instruction de visualisation (106) de la pluralité d'instructions de visualisation (106) au modèle de récupération de données de telle sorte que, pendant l'utilisation, des données récupérées par le modèle de récupération de données peuvent être utilisées pour peupler l'instruction de visualisation (106) associée.

3. Procédé selon la revendication 2, dans lequel au moins l'une de la pluralité d'instructions de visualisation (106) comprend un élément d'UI qui est configuré pour générer une réponse à une interaction d'utilisateur avec l'élément d'UI.

4. Procédé selon la revendication 2 ou 3, dans lequel chaque instruction de visualisation (106) comporte un type d'élément d'UI commun pris dans le groupe comprenant une étiquette, un bouton, une liste, un champ de texte, une image, un conteneur de contenu Web, un interrupteur et une barre de défilement.

5. Procédé selon l'une quelconque des revendications 2 à 4, dans lequel l'étape de sélection comprend la sélection de l'élément d'UI ayant une instruction de visualisation (106) qui comporte un identifiant d'écran cible, qui définit un écran (104) optionnel jusqu'auquel il est possible de naviguer lorsqu'une interaction d'utilisateur déclenche une navigation jusqu'à cet écran (104).

6. Procédé selon l'une quelconque des revendications 2 à 5, dans lequel chacune de la pluralité d'instructions de visualisation (106) a un modèle de disposition (108) associé qui spécifie le positionnement de l'élément d'UI au sein de l'écran (104).

7. Procédé selon l'une quelconque des revendications 2 à 6, dans lequel l'étape de sélection comprend la sélection de l'élément d'UI où chaque instruction de visualisation (106) de l'élément d'UI a une liste associée d'instructions de visualisations enfants qui définissent la pluralité d'éléments d'UI enfants et la façon dont la pluralité d'éléments d'UI enfants doivent être configurés et affichés au sein de l'écran (104), dans lequel chaque élément d'UI enfant a un élément d'UI parent à une position hiérarchique plus élevée et est défini au sein d'une limite de coordonnées de la représentation d'élément d'UI parent de l'instruction de visualisation (106).

8. Procédé selon l'une quelconque des revendications 1 à 7, dans lequel l'étape de définition comprend la définition du modèle de récupération de données pour comprendre un modèle d'interface de programme d'application (API) (202) définissant une demande/réponse de protocole de transfert hypertexte (HTTP) et le modèle d'API (202) spécifie un modèle de localisateur de ressources uniforme (URL) (214) et comprend un item d'API (204) destiné à stocker une réponse à la demande HTTP, l'item d'API (24) spécifiant un type de structure de données récupérées dans laquelle les données récupérées seront mappées, une propriété de valeur (210) qui spécifie le type de données récupérées, telle qu'une liste ou une table de hachage, et une zone-clé (212) qui spécifie un chemin de données jusqu'à l'item d'API (204) spécifique au sein de la structure de données récupérées.

9. Procédé selon l'une quelconque des revendications 1 à 8, dans lequel l'étape de sélection comprend la sélection de l'élément d'UI ayant un écran (104) qui comprend une pluralité d'écrans (104) qui fournissent chacun une représentation de modèle d'une pluralité d'éléments d'UI qui composent l'UI (16) à afficher dans une page de l'UI (16) ; et la pluralité d'écrans (104) forment un module (102) qui regroupe ensemble les écrans (104) pour former l'UI (16).

10. Système mis en œuvre par ordinateur adapté pour créer un fichier de configuration (12) pour une utilisation dans la génération d'une page d'une interface utilisateur (UI) (16) générée par ordinateur, le fichier de configuration (12) représentant un modèle de données et décrivant une pluralité d'éléments d'UI de l'UI (16) et leur aspect au sein de la page de l'UI (16), le fichier de configuration (12) comprenant une couche d'UI (100) destinée à spécifier la pluralité d'éléments d'UI qui comprennent des écrans (104) et des instructions de visualisation (106) qui définissent l'aspect et la fonctionnalité de chacun des éléments d'UI à configurer et afficher et une couche de données (200) destinée à spécifier, pour chacun de la pluralité d'éléments d'UI, un emplacement distant respectif de données à obtenir pour peupler les éléments d'UI ; chaque écran (104) comprenant une représentation de modèle de l'ensemble des éléments qui sont requis pour un affichage précis de l'UI sur la page et la couche de données (200) comprenant une pluralité de modèles de récupération de données, le système comprenant :
un outil de sélection configuré pour permettre la sélection (302) d'un élément d'UI parmi une pluralité d'icônes d'éléments d'UI affichées sur une interface utilisateur graphique ;
un outil de positionnement configuré pour permettre le positionnement (302) de l'élément d'UI sélectionné sur un canevas qui représente la page ;
un outil de configuration destiné à permettre à un créateur de configurer l'aspect de l'élément d'UI sélectionné sur le canevas ;
un processeur destiné à mettre à jour (306) un fichier de configuration (12) sur la base de la position et de la configuration de l'élément d'UI sélectionné sur le canevas ;
un outil de définition configuré pour permettre la définition (304) de données pour peupler l'élément d'UI sélectionné par spécification d'une adresse de communications distante auprès de laquelle des données doivent être extraites ;
le processeur étant configuré pour mettre à jour (308) le modèle de récupération de données de la pluralité de modèles de données dans la couche de données (200) avec l'adresse de communications distante auprès de laquelle des données doivent être récupérées et pour lier ensemble (314) le modèle de récupération de données et l'élément d'UI sélectionné de telle sorte que, pendant l'utilisation, des données obtenues par l'intermédiaire du modèle de récupération de données peuvent être utilisées pour peupler l'élément d'UI sélectionné lié à ce modèle de récupération de données dans la couche de données (200) lors de la génération de l'UI (16).

11. Application de générateur (18a, 18b, 18c) mise en œuvre par ordinateur destinée à créer une interface utilisateur (UI) (16) générée par ordinateur, l'application de générateur étant installée sur un dispositif utilisateur (7, 8, 9), étant compatible avec un système d'exploitation spécifique du dispositif utilisateur (7, 8, 9), et étant configurée pour fonctionner avec le système d'exploitation ; dans laquelle l'application de générateur (18a, 18b, 18c) est configurée pour :
extraire un fichier de configuration (12) auprès d'un serveur de configuration distant (3), le fichier de configuration (12) décrivant une pluralité d'éléments d'UI de l'UI (16) et leur aspect au sein de la page de l'UI, le fichier de configuration (12) comprenant une couche d'UI (100) définissant une pluralité d'éléments d'UI qui comprennent chacun des écrans (104) et des instructions de visualisation (106) qui définissent l'aspect et la fonctionnalité de chacun des éléments d'UI à configurer et afficher et une couche de données (200) définissant une pluralité de modèles de récupération de données destinés à obtenir des données requises pour peupler les éléments d'UI auprès d'adresses de communications distantes ; dans laquelle chaque modèle de récupération de données est associé à un élément d'UI correspondant et chaque écran (104) comprend une représentation de modèle de l'ensemble des éléments qui sont requis pour un affichage précis de l'UI sur la page ;
utiliser le fichier de configuration (12) pour générer une disposition d'UI sur la base des définitions d'éléments d'UI fournies dans la couche d'UI (100),
utiliser les modèles de récupération de données de la couche de données (200) pour extraire des données associées à chaque élément d'UI spécifié dans la couche d'UI (100) du fichier de configuration (12) auprès d'un ou de plusieurs serveurs distants ;
fournir les données extraites à des éléments d'UI correspondants auxquels les modèles de récupération de données sont associés pour créer l'UI (16).

12. Application de générateur selon la revendication 11, configurée en outre pour créer un hachage du fichier de configuration (12) et pour envoyer le hachage au serveur de configuration distant (3), dans laquelle le hachage peut être utilisé par le serveur de configuration distant (3) pour déterminer la version actuelle du fichier de configuration (12) qui est utilisé sur l'application de générateur (18a, 18b, 18c) de telle sorte que le serveur de configuration distant (3) peut déterminer si une version mise à jour du fichier de configuration (12) est requise par l'application de générateur (18a, 18b, 18c).

13. Application de générateur (18a, 18b, 18c) selon les revendications 11 ou 12, configurée en outre pour :
mettre en mémoire cache chaque réponse reçue d'un modèle de récupération de données exécuté précédemment ;
rechercher dans les réponses reçues mises en mémoire cache une réponse issue d'un modèle de récupération de données exécuté précédemment qui concorde avec un modèle de récupération de données actuel ; et
utiliser la réponse mise en mémoire cache si une réponse issue d'un modèle de récupération de données exécuté précédemment concordant est trouvée.

14. Procédé de création d'une interface utilisateur (UI) (16) générée par ordinateur, le procédé comprenant :
l'installation (402) d'une application de générateur (18a, 18b, 18c) mise en œuvre par ordinateur sur un dispositif utilisateur (7, 8, 9), l'application de générateur (18a, 18b, 18c) étant compatible avec un système d'exploitation spécifique du dispositif utilisateur (7, 8, 9) et étant configurée pour fonctionner avec le système d'exploitation de ce dispositif (7, 8, 9) ;
la mise en route de l'application de générateur (18a, 18b, 18c) mise en œuvre par ordinateur pour :
extraire (404) un fichier de configuration (12) auprès d'un serveur de configuration distant (3), le fichier de configuration (12) décrivant une pluralité d'éléments d'UI de l'UI (16) et leur aspect au sein de la page de l'UI, le fichier de configuration (12) comprenant une couche d'UI (100) définissant une pluralité d'éléments d'UI qui comprennent chacun des écrans (104) et des instructions de visualisation (106) qui définissent l'aspect et la fonctionnalité de chacun des éléments d'UI à configurer et afficher et une couche de données (200) définissant une pluralité de modèles de récupération de données destinés à obtenir des données requises pour peupler les éléments d'UI auprès d'adresses de communications distantes ; dans lequel chaque modèle de récupération de données est associé à un élément d'UI correspondant et chaque écran (104) comprend une représentation de modèle de l'ensemble des éléments qui sont requis pour un affichage précis de l'UI sur la page ;
générer (406) une disposition d'UI sur la base des définitions d'éléments d'UI fournies dans la couche d'UI (100) du fichier de configuration (12),
utiliser la couche de données (200) pour extraire (408) des données associées à chaque élément d'UI spécifié dans la couche d'UI (100) du fichier de configuration (12) auprès d'un ou de plusieurs serveurs distants ;
fournir (410) les données extraites à des éléments d'UI correspondants auxquels les modèles de récupération de données sont associés ; et
afficher les éléments d'UI et les données extraites sous la forme de l'UI (16).

15. Produit programme d'ordinateur comprenant des instructions qui, lorsque le programme est exécuté par un ordinateur, amènent l'ordinateur à effectuer le procédé de la revendication 1 ou de la revendication 14.
